# EUROPÄISCHE PATENTSCHRIFT

(11) **EP 2 308 644 B1**
(45) Veröffentlichungstag und Bekanntmachung des Hinweises auf die Patenterteilung: **23.01.2019**
(21) Anmeldenummer: 10010013.0
(22) Anmeldetag: 21.09.2010
(51) Int. Cl.: B24B 13/00, B24B 41/00, B23Q 7/04, B23Q 3/155, B24B 27/00

(54) **Vorrichtung zur Feinbearbeitung von optisch wirksamen Flächen an Brillengläsern**
Apparatus for fine machining optically active surfaces of spectacle lenses
Dispositif de traitement précis de surfaces optiquement actif sur des lentilles ophtalmiques

(30) Priorität: 08.10.2009 DE 102009048757
(43) Veröffentlichungstag der Anmeldung: 13.04.2011
(73) Patentinhaber: Satisloh AG, 6340 Baar (CH)
(72) Erfinder: Fiedler, Udo, Dr., 35633 Lahnau/Dorlar (DE); Schäfer, Holger, 35789 Weilmünster (DE); Wallendorf, Steffen, 35582 Wetzlar - Dutenhofen (DE)
(74) Vertreter: Oppermann, Mark

(56) Entgegenhaltungen:
- EP-A1- 1 867 430
- WO-A1-2004/012888
- WO-A1-2005/005098
- WO-A1-2005/105372
- DE-A1- 3 206 547
- DE-A1- 19 751 750
- US-A- 5 967 879
- US-A1- 2007 155 286

## Beschreibung

### TECHNISCHES GEBIET

Die vorliegende Erfindung bezieht sich auf eine Vorrichtung zur Feinbearbeitung von optisch wirksamen Flächen an Brillengläsern, gemäß dem Oberbegriff des Patentanspruchs 1. Insbesondere bezieht sich die Erfindung auf eine Vorrichtung zur Feinbearbeitung der optisch wirksamen Flächen an Brillengläsern, wie sie in sogenannten "RX-Werkstätten", d.h. Produktionsstätten zur Fertigung von individuellen Brillengläsern nach Rezept in großem Umfang zum Einsatz kommen, etwa um die Brillengläser zu polieren.

Wenn nachfolgend beispielhaft für Werkstücke mit optisch wirksamen Flächen von "Brillengläsern" die Rede ist, sollen darunter nicht nur Brillenlinsen aus Mineralglas, sondern auch Brillenlinsen aus allen anderen gebräuchlichen Materialien, wie Polycarbonat, CR 39, HI-Index, etc., also auch Kunststoff verstanden werden.

### STAND DER TECHNIK

Die spanende Bearbeitung der optisch wirksamen Flächen von Brillengläsern kann grob in zwei Bearbeitungsphasen unterteilt werden, nämlich zunächst die Vorbearbeitung der optisch wirksamen Fläche zur Erzeugung der rezeptgemäßen Makrogeometrie und sodann die Feinbearbeitung der optisch wirksamen Fläche, um Vorbearbeitungsspuren zu beseitigen und die gewünschte Mikrogeometrie zu erhalten. Während die Vorbearbeitung der optisch wirksamen Flächen von Brillengläsern u.a. in Abhängigkeit vom Material der Brillengläser durch Schleifen, Fräsen und/oder Drehen erfolgt, werden die optisch wirksamen Flächen von Brillengläsern bei der Feinbearbeitung üblicherweise einem Feinschleif-, Läpp- und/oder Poliervorgang unterzogen, wozu man sich einer entsprechenden Maschine bedient.

Vor allem handbeschickte Poliermaschinen in RX-Werkstätten werden meist als "Zwillingsmaschinen" ausgeführt, so dass vorteilhaft die zwei Brillengläser eines "RX-Jobs" - ein Brillenglasrezept besteht stets aus einem Brillenglaspaar - gleichzeitig feinbearbeitet werden können. Eine solche "Zwillings"-Poliermaschine ist beispielsweise aus den Druckschriften US-A-2007/0155286 und US-A-2007/0155287 bekannt.

Auch wurde schon vorgeschlagen, derartige "Zwillingsmaschinen" zu automatisieren. So offenbart die gattungsbildende WO-A-2005 105372 (Fig. 1) eine Linsenbearbeitungsmaschine mit zwei parallel angeordneten Werkstückspindeln, die nicht nur der Bearbeitung der Linsen dienen, sondern auch die Funktion des Werkstücktransports übernehmen. Die beiden unabhängig voneinander drehend angetriebenen Werkstückspindeln (Rotationsachsen c₁, c₂) sind hierzu nebeneinander auf einem horizontalen Querschlitten angeordnet (Verschiebeachsen x₁, x₂), und zwar derart, dass sie rechtwinklig zu ihren Rotationsachsen c₁, c₂ im Winkel schwenkbar sind (Schwenkachsen b₁, b₂). Der Querschlitten ist seinerseits auf einer Hub-Schwenksäule angebracht, mit der die Werkstückspindeln über verschiedene, in einem unteren Bereich der Maschine auf einem gemeinsamen Teilkreis angeordnete Bearbeitungs- und Ladestationen geschwenkt (Drehachse k) und abgesenkt (Hubachse w) werden können. Zum Be- und Entladen der Linsen aus Rezeptkästen sind zwei weitere Hub- und Wendeeinrichtungen vorgesehen (Senkachsen n₁, n₂ und Schwenkachse s). Für den Wechsel der Polierwerkzeuge besitzt die Maschine ferner zwei drehend indexierbare, radförmige Werkzeugmagazine, aus denen die Werkzeuge mit Hilfe von zwei auf einem Greiferarm angeordneten Parallelgreifern in zwei parallel nebeneinander angeordnete Werkzeugspindeln (Polierachsen p₁, p₂) eingelegt werden können, die ihrerseits hubbeweglich sind (Teleskopachsen z₁, z₂). Der Greiferarm ist hierzu schließlich in vertikaler und horizontaler Richtung linear bewegbar (Austauschachse a₁, Transportachse t₁).

Ein Nachteil dieser vorbekannten Linsenbearbeitungsmaschine wird darin gesehen, dass der beschriebene kombinierte Einsatz der Werkstückspindeln für Transport und Bearbeitung der Linsen eine relativ lange Beschickungszeit bedingt, was den Durchsatz dieser Maschine stark limitiert.

Des Weiteren offenbart die EP-A-1 867 430 eine Schleif- und Poliermaschine zum Schleifen und/oder Polieren von Werkstücken in optischer Qualität, die mindestens eine Werkzeugspindel und mindestens eine Werkstückspindel aufweist, die in senkrecht zueinander stehenden Richtungen relativverstellbar sind. Dabei ist die Werkzeugspindel endseitig zur gleichachsigen Aufnahme jeweils eines Werkzeugs ausgebildet und in einem Spindelgehäuse gelagert, welches um eine rechtwinklig zur Werkzeugspindel angeordnete Schwenkachse schwenkbar ist, um jeweils ein Werkzeug für einen Bearbeitungseingriff bereitzustellen. Ferner ist eine Einrichtung vorgesehen, mit welcher die Werkzeugspindel in beliebige definierte Winkelpositionen bezüglich der Werkstückspindel verdrehbar ist, wobei diese Einrichtung aus nur einem an der Schwenkachse angeordneten Antrieb besteht, mittels dessen die Werkzeugspindel um die Schwenkachse sowohl für den gewünschten Bearbeitungseingriff verschwenkbar als auch in besagte Winkelpositionen bezüglich der Werkstückspindel verdrehbar ist. Damit soll eine hochgenau arbeitende und kompakt bauende Maschine geschaffen werden, die es auf einfache und kostengünstige Weise ermöglicht, mehrere Schleif- und Polierwerkzeuge einzusetzen.

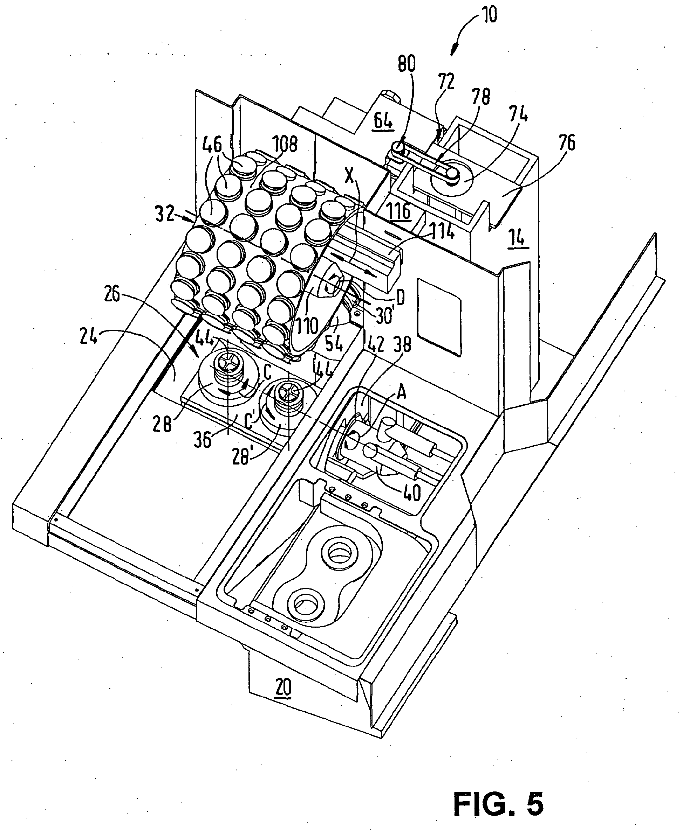

In einer Ausgestaltung dieser Maschine ist am Spindelgehäuse ein Funktionselement für die Werkstückhandhabung angebracht (Fig. 5). Hierbei handelt es sich um einen Ladearm, bestehend aus einem Distanzstück und einem Pneumatikzylinder mit Kolbenstange, an derem freien Ende ein Sauger angebracht ist. Letzterer arbeitet bei einem Werkstückwechsel mit einem um 180° schwenkbaren Sauger eines externen Ladesystems zusammen, welches ansonsten nicht näher beschrieben wird. Das oben zum gattungsbildenden Stand der Technik Gesagte gilt hier ebenfalls.

Ferner ist aus der DE-A-32 06 547 eine Schleifmaschine zum Umfangsschleifen von Werkstücken bekannt, die mit einem CNCsteuerbaren Werkstückhandhabungssystem versehen ist. Letzteres besteht im Wesentlichen aus einem über eine Portalsäule mit einem Maschinenbett fest verbundenen, im Übrigen durch Portalsäulen abgestützten Führungsträger, aus einem am Führungsträger verfahrbaren Portalwagen sowie einer mit dem Portalwagen fest verbundenen Hubeinrichtung mit Hubgestänge, die an ihrem Ende einen Greiferkopf trägt. Der um eine horizontale Achse drehbare Greiferkopf weist zwei Werkstückgreifer auf, die am Greiferkopf sich diametral zu dessen Drehachse gegenüberstehend angeordnet sind. Die Werkstückgreifer sind durch Drehen des Greiferkopfs um die Achse wechselweise so zu einer Werkstückspannvorrichtung an einer Werkstückspindel einstellbar, dass die Achse eines vom Werkstückgreifer gehaltenen Werkstücks koaxial zur Werkstückspindel verläuft. Zusätzlich ist der Greiferkopf mit zwei sich diametral zu dessen Drehachse gegenüberstehend angeordneten Werkzeuggreifern versehen, die ebenfalls durch Drehung des Greiferkopfs um seine Achse wechselweise so zu einem Schleifwerkzeughalter an einer Schleifspindel einstellbar sind, dass die Achse eines vom Werkzeuggreifer gehaltenen Schleifwerkzeugs koaxial zur Schleifspindel verläuft. Somit besteht die Möglichkeit, Werkstücke bzw. Werkzeuge mit dem jeweiligen Greifer aus dem entsprechenden Magazin aufzunehmen, in den Arbeitsraum der Schleifmaschine zu bringen und dort der Werkzeugspannvorrichtung bzw. dem Schleifwerkzeughalter zuzuführen, wozu jedoch ein erheblicher vorrichtungstechnischer Aufwand betrieben wird.

Schließlich offenbart die US-A-5 967 879 ein System zum Schleifen der optischen Flächen und Ränder von Brillengläsern, welches eine zentrale CNC-Handlingeinheit (Roboter) zum Ausrichten, Transportieren und Laden/Entladen der Brillengläser an bzw. zwischen verschiedenen Bearbeitungseinheiten des Systems aufweist. Diese CNC-Handlingeinheit dient indes nicht dem Werkzeugwechsel an den verschiedenen Bearbeitungseinheiten.

### AUFGABENSTELLUNG

Der Erfindung liegt die Aufgabe zugrunde, eine möglichst einfach und kostengünstig aufgebaute Vorrichtung zur Feinbearbeitung der optisch wirksamen Flächen an Brillengläsern zu schaffen, die eine vergleichsweise hohe Produktivität ermöglicht.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 9.

Erfindungsgemäß weist bei einer Vorrichtung zur Feinbearbeitung von optisch wirksamen Flächen an Brillengläsern, die mindestens eine Werkstückspindel, an der ein Brillenglas spannbar ist, mindestens eine relativ zur Werkstückspindel bewegbare Werkzeugspindel, an der ein Werkzeug für eine Bearbeitung des Brillenglases aufnehmbar ist, und ein Ladesystem umfasst, das dazu dient, ein Brillenglas zur Werkstückspindel hin oder davon weg und/oder ein Werkzeug zur Werkzeugspindel hin oder davon weg zu bringen, das Ladesystem einen von Werkstückspindel und Werkzeugspindel separaten Ladekopf mit mindestens einem Ladeabschnitt auf, der sowohl mit wenigstens einer Aufnahme für ein Brillenglas als auch mit wenigstens einer Aufnahme für ein Werkzeug ausgerüstet ist, so dass in einem Ladevorgang sowohl das Werkzeug als auch das Brillenglas ladbar sind, wobei das Ladesystem einen Ladearm aufweist, an dem der Ladekopf um eine Schwenkachse schwenkbar gehalten ist, und der Ladearm mit Ladekopf um eine zur Schwenkachse senkrecht stehende weitere Schwenkachse schwenkbar sowie in einer Richtung linear verschiebbar ist, die parallel zur weiteren Schwenkachse verläuft.

Dadurch, dass der Ladekopf sowohl von der Werkstückspindel als auch der Werkzeugspindel getrennt ist, mithin eine eigenständige Baugruppe darstellt, ist es nicht erforderlich, besagte Spindeln für Transportaufgaben zu benutzen, die Spindeln können vielmehr verglichen zum gattungsbildenden Stand der Technik länger für die eigentliche Bearbeitung der Brillengläser eingesetzt werden, während Lade- bzw. Transportaufgaben vom Ladekopf übernommen werden. Die Bearbeitungsfunktion und die Handlingfunktionen können also strikt getrennt werden und - mit Ausnahme eines sehr schnellen Werkstück- und Werkzeugwechsels - parallel ablaufen. Da darüber hinaus ein und derselbe Ladeabschnitt des Ladekopfs Aufnahmen für Brillenglas und Werkzeug aufweist, so dass separate Ladeeinrichtungen für Brillenglas und Werkzeug entbehrlich sind - was auch den vorrichtungstechnischen Aufwand verringert, können Werkzeug und Brillenglas vorteilhaft in einem einzigen Ladevorgang oder Bewegungsablauf, d.h. simultan geladen bzw. entladen werden. Im Ergebnis werden sehr kurze Span-zu-Span-Zeiten und damit ein hoher Werkstückdurchsatz / eine hohe Produktivität der Vorrichtung mit sehr vertretbarem Aufwand ermöglicht.

Für die Bewegung des gesamten Ladekopfs relativ zu den Werkzeug- bzw. Werkstückspindeln weist das Ladesystem hierbei einen Ladearm auf, an dem der Ladekopf um eine Schwenkachse schwenkbar gehalten ist. Zusätzlich ist der Ladearm mit Ladekopf um eine zu besagter Schwenkachse senkrecht stehende weitere Schwenkachse schwenkbar. Darüber hinaus ist der Ladearm mit Ladekopf in einer Richtung linear verschiebbar, die parallel zur weiteren Schwenkachse verläuft.

In einer bevorzugten Ausgestaltung des Ladekopfs kann der Ladeabschnitt des Ladekopfs zwei Aufnahmen für Brillengläser aufweisen, so dass mittels des Ladekopfs in einem Ladevorgang ein in der Vorrichtung bereits bearbeitetes Brillenglas gegen ein in der Vorrichtung noch zu bearbeitendes Brillenglas austauschbar ist. Demnach ist es also nicht erforderlich, ein von der Werkstückspindel abgenommenes, bearbeitetes Brillenglas zunächst wegzubringen und abzulegen, um ein zu bearbeitendes Brillenglas zu holen und zu spannen, vielmehr kann der Werkstückwechsel in einem Arbeitsgang nahe der Werkstückspindel sehr zügig erfolgen. Alternativ oder ergänzend hierzu kann der Ladeabschnitt des Ladekopfs zwei Aufnahmen für Werkzeuge aufweisen, so dass mittels des Ladekopfs in einem Ladevorgang ein in der Vorrichtung bereits verwendetes Werkzeug gegen ein in der Vorrichtung noch zu verwendendes Werkzeug austauschbar ist. Auch dies gestattet einen sehr zügigen Wechsel, diesmal des Werkzeugs, was Stillstandszeiten bei der eigentlichen Bearbeitung vorteilhaft minimiert.

Im weiteren Verfolg des Erfindungsgedankens können zur gleichzeitigen Bearbeitung eines Brillenglaspaars, insbesondere der Brillengläser für ein und dieselbe Brille, zwei Werkstückspindeln und zwei Werkzeugspindeln vorgesehen sein (Stichwort "Zwillingsmaschine"), wobei der Ladekopf dann zur gleichzeitigen Bedienung beider Werkstückspindeln und beider Werkzeugspindeln in Parallelanordnung zwei der vorbeschriebenen Ladeabschnitte aufweist.

Es ist ferner bevorzugt, wenn als Aufnahme für das Brillenglas am Ladekopf ein bzw. mehrere Vierfingergreifer eingesetzt wird / werden, die vorteilhaft Brillengläser mit beliebiger Umfangskontur zu greifen vermögen, ohne beim Greifen oder während des Haltens des Brillenglases die Rotationsachse des Brillenglases zu verschieben. Bei der Aufnahme für das Werkzeug handelt es sich hingegen bevorzugt um einen Parallelgreifer, wie er problemlos und kostengünstig im Handel erhältlich ist.

Weist die Feinbearbeitungsvorrichtung in diesem Zusammenhang ein Transportsystem für die Brillengläser, eine Waschstation für die Brillengläser, einen Arbeitsraum für die Bearbeitung der Brillengläser mittels der Werkzeuge und ein Werkzeugmagazin zur Aufnahme einer Mehrzahl von Werkzeugen auf, so können diese Systeme und Stationen in vorrichtungstechnisch einfacher Ausgestaltung auf einem gemeinsamen Schwenkkreis um die weitere Schwenkachse liegen, so dass sie durch Verschwenken des Ladearms um die weitere Schwenkachse leicht von dem Ladekopf anfahrbar sind.

In weiterer Ausgestaltung der Erfindung besitzt eine Vorrichtung zur Feinbearbeitung von optisch wirksamen Flächen an Brillengläsern in Zwillings-Bauweise zwei Werkstückspindeln zum Drehantreiben von zwei Brillengläsern um Werkstück-Drehachsen (B, B') und zwei Werkzeugspindeln zum Drehantreiben von zwei Werkzeugen um Werkzeug-Drehachsen (C, C'), wobei die Werkstückspindeln zudem in mindestens zwei verschiedenen Richtungen (Y, Z) relativ zu den Werkzeugspindeln bewegbar sind, mit der Besonderheit, dass die Vorrichtung für das Drehantreiben der zwei Brillengläser und für das Drehantreiben der zwei Werkzeuge jeweils nur einen Antrieb aufweist, wobei zur Erzeugung der Relativbewegungen zwischen den Werkstückspindeln und den Werkzeugspindeln für jede Bewegungsrichtung (Y, Z) auch nur jeweils ein Antrieb vorgesehen ist. Durch diese konsequente Nutzung gemeinsamer Antriebe kann die Feinbearbeitungsvorrichtung insgesamt sehr kostengünstig aufgebaut werden.

Schließlich können bei einer solchen Vorrichtung die Werkzeugspindeln relativ zu den Werkstückspindeln zudem in einer dritten, von den vorgenannten zwei Richtungen (Y, Z) verschiedenen Richtung (A) bewegbar, z.B. verschwenkbar sein, wobei auch zur Erzeugung der Relativbewegung in der dritten Bewegungsrichtung (A) nur ein Antrieb vorgesehen ist, was ebenfalls einem einfachen und kostengünstigen Aufbau der Vorrichtung förderlich ist.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen Zeichnungen näher erläutert. In den Zeichnungen zeigen:

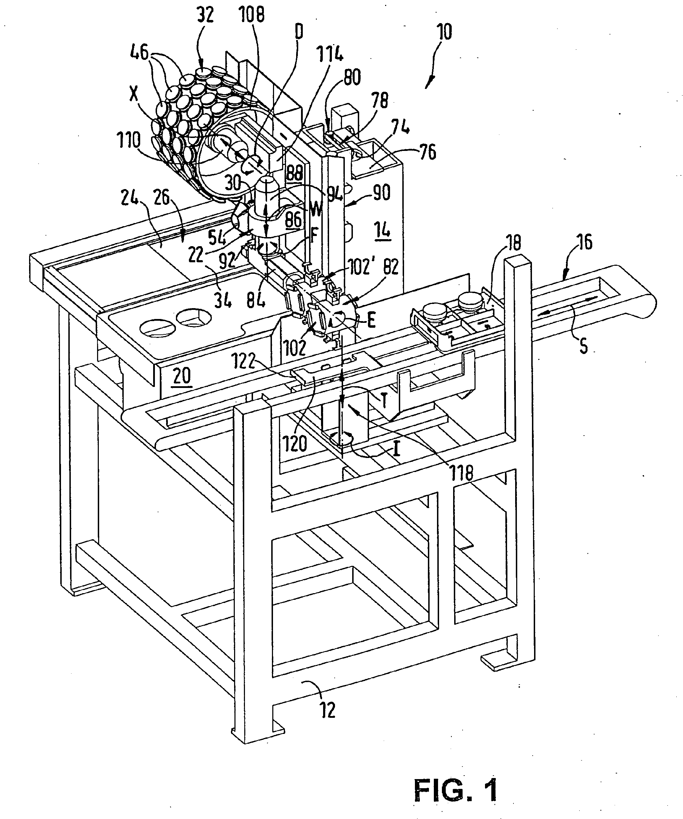

- Fig. 1: eine perspektivische Ansicht einer erfindungsgemäßen Feinbearbeitungsvorrichtung für Brillengläser von schräg oben / vorne rechts, wobei zur Freigabe der Sicht auf wesentliche Bauteile bzw. Baugruppen der Vorrichtung und zur Vereinfachung der Darstellung insbesondere die Bedieneinheit und Steuerung, Teile der Verkleidung, die Versorgungseinrichtungen (einschließlich Leitungen, Schläuche und Rohre) für Strom, Druckluft und Poliermittel, der Poliermittelrücklauf, Zuund Ablauf für Reinigungsflüssigkeit sowie die Mess-, Wartungs- und Sicherheitseinrichtungen - auch jene an den CNC-Achsen - weggelassen wurden;
- Fig. 2: eine im Maßstab gegenüber der Fig. 1 vergrößerte, perspektivische Ansicht der Feinbearbeitungsvorrichtung gemäß Fig. 1 von schräg oben / vorne rechts, wobei gegenüber der Darstellung in Fig. 1 das Maschinengestell, das Transportsystem für die Rezeptkästen, das Ladesystem für Werkstücke und Werkzeuge sowie weitere Teile der Verkleidung weggelassen wurden;
- Fig. 3: eine im Maßstab gegenüber der Fig. 2 nochmals vergrößerte, perspektivische Ansicht der Feinbearbeitungsvorrichtung gemäß Fig. 1 von schräg oben / vorne links, mit den Vereinfachungen der Fig. 2;
- Fig. 4: eine perspektivische Ansicht der Feinbearbeitungsvorrichtung gemäß Fig. 1 ähnlich der Fig. 3, Letzterer gegenüber jedoch von weiter links / weiter unten, mit den Vereinfachungen der Fig. 2;
- Fig. 5: eine perspektivische Ansicht der Feinbearbeitungsvorrichtung gemäß Fig. 1 von schräg oben / vorne rechts, mit den Vereinfachungen der Fig. 2;
- Fig. 6: eine perspektivische Ansicht der Feinbearbeitungsvorrichtung gemäß Fig. 1 ähnlich der Fig. 4 und mit den Vereinfachungen der Fig. 2 (bis auf eine Abdeckung der Waschstation), wobei zusätzlich das Werkzeugmagazin sowie die Waschstation weggelassen und die Vorrichtung im Bereich des Arbeitsraums und des Schlittens für die Werkstückspindeln aufgebrochen wurde;
- Fig. 7: eine perspektivische Ansicht der Feinbearbeitungsvorrichtung gemäß Fig. 1 von schräg oben / hinten rechts, mit den Vereinfachungen der Fig. 6;
- Fig. 8: eine perspektivische Ansicht der Feinbearbeitungsvorrichtung gemäß Fig. 1 ähnlich der Fig. 2, Letzterer gegenüber jedoch in einem vergrößerten Maßstab, wobei zusätzlich die Waschstation, das Werkzeugmagazin, das den Arbeitsraum begrenzende Blechgehäuse und weitere Teile der Verkleidung weggelassen wurden;
- Fig. 9: eine perspektivische Ansicht der Feinbearbeitungsvorrichtung gemäß Fig. 1 von schräg unten / vorne rechts, mit den Vereinfachungen der Fig. 8;
- Fig. 10: eine perspektivische Ansicht der Feinbearbeitungsvorrichtung gemäß Fig. 1 ähnlich der Fig. 1 in vergrößertem Maßstab, wobei lediglich die Vertikalsäule und das daran angeflanschte Ladesystem für Werkstücke und Werkzeuge dargestellt wurden;
- Fig. 11: eine perspektivische Ansicht der Feinbearbeitungsvorrichtung gemäß Fig. 1 von schräg oben / hinten links, mit den Vereinfachungen der Fig. 10;
- Fig. 12: eine perspektivische Ansicht der Feinbearbeitungsvorrichtung gemäß Fig. 1 von schräg oben / vorne links, mit den Vereinfachungen der Fig. 10; und
- Fig. 13: bis 49 perspektivische Ansichten der Feinbearbeitungsvorrichtung gemäß Fig. 1, die einen möglichen, vollautomatischen Polierprozess in dessen zeitlichem Ablauf illustrieren.

Wenn nachfolgend von "horizontal" und "vertikal" die Rede ist, meint dies zwei senkrecht zueinander verlaufende Richtungen. Auch wenn mit diesen Begriffen bei dem nachfolgend beschriebenen Ausführungsbeispiel Richtungen beschrieben werden, die in der Realität im Wesentlichem horizontal bzw. im Wesentlichen vertikal verlaufen, ist dies nicht in dem Sinne beschränkend zu verstehen, dass die entsprechenden Richtungen nicht auch beliebig im Raum liegen könnten, solange gewährleistet bleibt, dass "horizontal" und "vertikal" senkrecht zueinander verlaufen.

### DETAILLIERTE BESCHREIBUNG DES AUSFÜHRUNGSBEISPIELS

In sämtlichen Figuren ist eine Feinbearbeitungsvorrichtung insbesondere zum gleichzeitigen Polieren von zwei Brillengläsern L mit 10 beziffert. Die Feinbearbeitungsvorrichtung 10 besitzt ein Maschinengestell 12 und eine damit verbundene Vertikalsäule 14 als Träger für sämtliche Baugruppen. In einem in Fig. 1 vorderen Bereich der Feinbearbeitungsvorrichtung 10 ist ein Transportsystem 16 für Rezeptkästen 18 am Maschinengestell 12 befestigt. Die Rezeptkästen 18 sind in an sich bekannter Weise für die Aufnahme eines Paars aufgeblockter Brillengläser L ausgebildet und dienen in einer RX-Werkstatt dazu, die Brillengläser L von einer Arbeitsstation zur nächsten Arbeitsstation zu transportieren. Im vorliegenden Fall werden mittels der Rezeptkästen 18 aufgeblockte Brillengläser L der Feinbearbeitungsvorrichtung 10 in einem unpolierten Zustand zugeführt. Nach der Feinbearbeitung nehmen die Rezeptkästen 18 die aufgeblockten Brillengläser L sodann in einem polierten Zustand wieder auf, worauf die Brillengläser L zu weiteren Arbeitsstationen transportiert werden können.

In einem in Fig. 1 mittleren Bereich der Feinbearbeitungsvorrichtung 10 ist links eine Waschstation 20 für die Brillengläser L und rechts davon ein Ladesystem 22 für Werkstücke und Werkzeuge zu erkennen, welches an der Vertikalsäule 14 angeflanscht ist und noch ausführlich beschrieben werden wird.

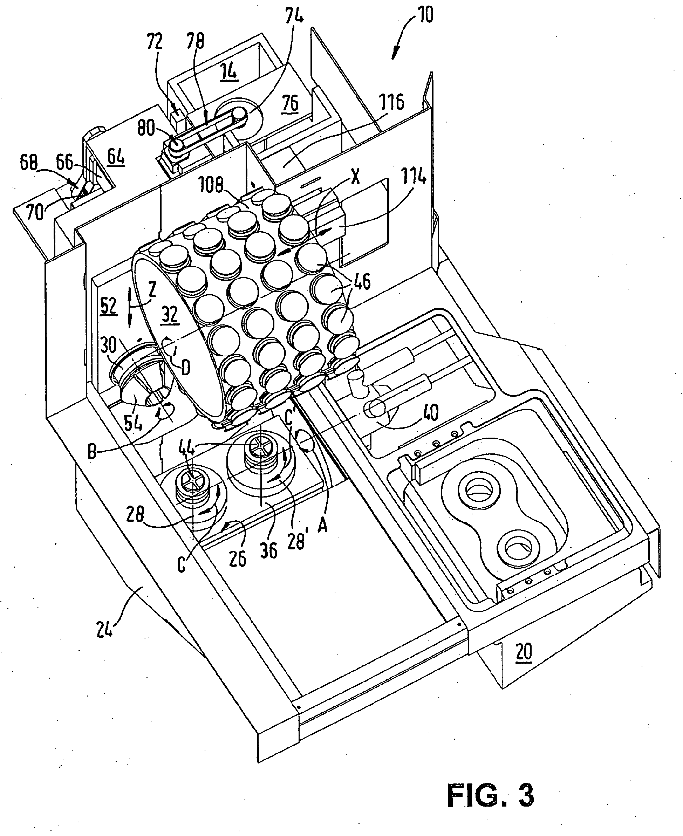

In einem in Fig. 1 hinteren Bereich ist links ein an der Vertikalsäule 14 montiertes Blechgehäuse 24 gezeigt, welches einen Arbeitsraum 26 der Feinbearbeitungsvorrichtung 10 begrenzt und an dem die Waschstation 20 befestigt ist. Das Blechgehäuse 24 und die Waschstation 20 sind zudem auf dem Maschinengestell 12 aufgelagert. Im Bereich des Arbeitsraums 26 befinden sich unten zwei parallel angeordnete Werkzeugspindeln 28, 28' (vgl. Fig. 3). In Fig. 3 dahinter sind zwei den Werkzeugspindeln 28, 28' zugeordnete, ebenfalls parallel angeordnete Werkstückspindeln 30, 30' vorgesehen. Sowohl die Werkzeugspindeln 28, 28' als auch die Werkstückspindeln 30, 30' sind bewegbar an der Vertikalsäule 14 befestigt, wie noch näher erläutert werden wird.

In dem in Fig. 1 hinteren Bereich ist zudem oberhalb des Blechgehäuses 24 ein Werkzeugmagazin 32 angeordnet, welches ebenfalls bewegbar an der Vertikalsäule 14 montiert ist. In dem in Fig. 1 gezeigten Zustand ist der Arbeitsraum 26 mittels eines horizontal bewegbaren, am Blechgehäuse 24 geführten Schiebers 34 (Arbeitsraumtür) verschlossen bzw. nach oben abgedeckt. Die weitere Kapselung des Arbeitsraums 26 mittels trogartiger Wanne, Teleskopabdeckungen und Faltenbälgen ist in den Figuren nur teilweise gezeigt und soll hier nicht näher beschrieben werden, weil diese Maßnahmen dem Fachmann geläufig sind.

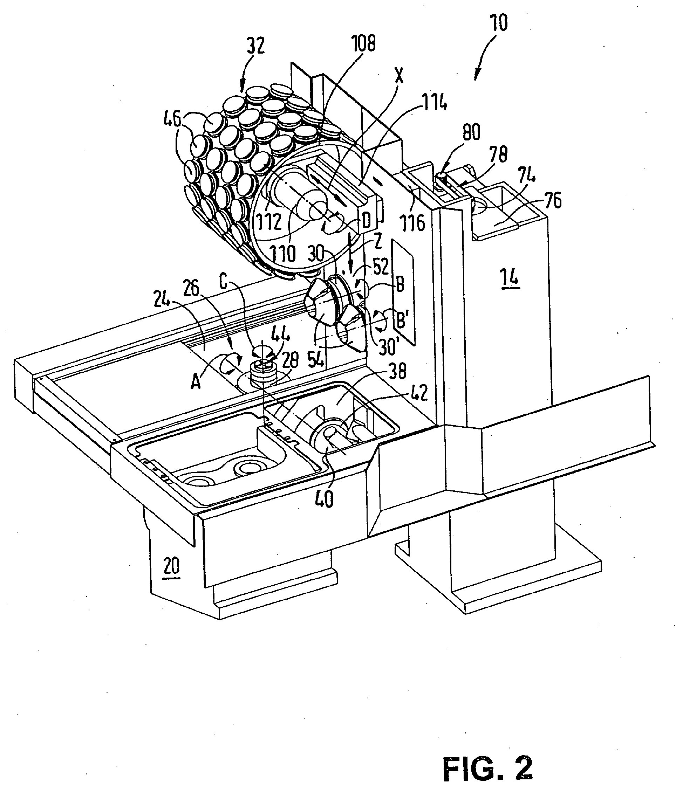

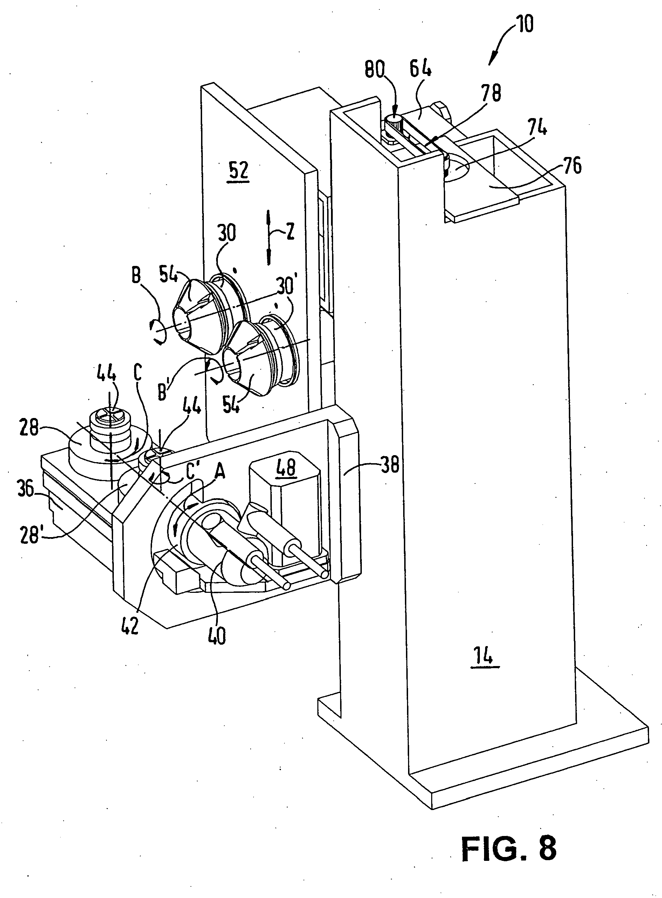

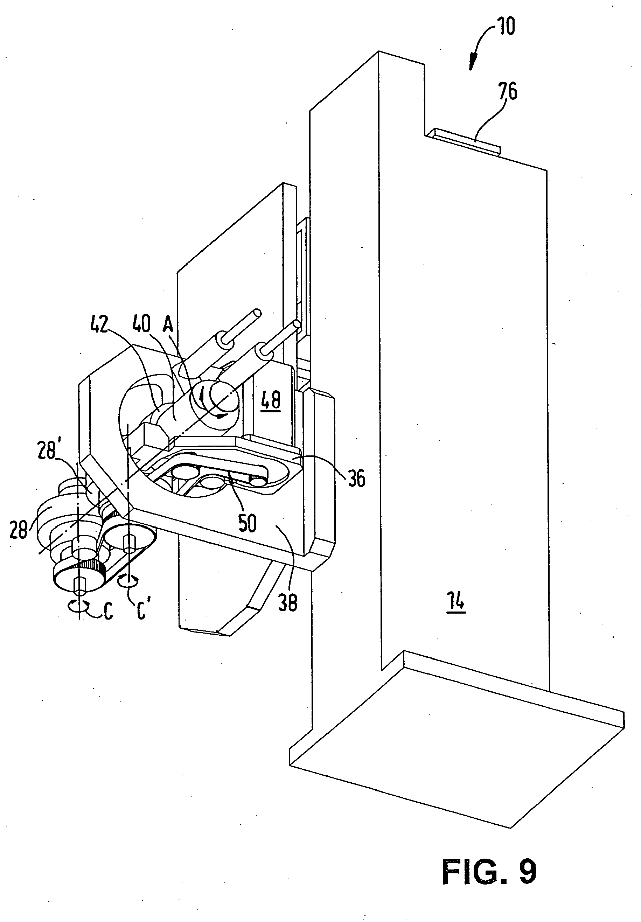

Weitere Details zu den Werkzeugspindeln 28, 28' sind insbesondere den Fig. 5 bis 9 zu entnehmen. Die Werkzeugspindeln 28, 28' sind in einem Schwenkjoch 36 montiert, welches im Drehwinkel CNC-geregelt um eine Schwenkachse A verschwenkbar ist. Hierfür ist das Schwenkjoch 36 drehbar an einer Konsole 38 (siehe die Fig. 8 und 9) gelagert, die ihrerseits an der Vertikalsäule 14 angeflanscht ist. Zur Erzeugung der Schwenkbewegung um die Schwenkachse A ist ein Schwenkantrieb 40 vorgesehen, der an der Konsole 38 angeflanscht und über ein Harmonic-Drive-Getriebe 42 mit dem Schwenkjoch 36 wirkverbunden ist. Mittels des Schwenkantriebs 40 sind das Schwenkjoch 36 und damit die Werkzeugspindeln 28, 28' aus einer in den Fig. 2 bis 9 dargestellten Ruheposition um 60° bis zu 90° gegen den Uhrzeigersinn in den Fig. 3, 4, 6 und 7 um die Schwenkachse A in eine in Richtung der Werkstückspindeln 30, 30' geneigte Bearbeitungsposition verschwenkbar, in der die Werkstückspindeln 30, 30' während der eigentlichen Polierbearbeitung verbleiben.

An ihren in den Arbeitsraum 26 hineinragenden Enden tragen die Werkzeugspindeln 28, 28' jeweils eine Werkzeug-Schnittstelle 44. Hinsichtlich Aufbau und Funktion der Werkzeug-Schnittstelle 44 sei an dieser Stelle ausdrücklich auf die ältere deutsche Patentanmeldung 10 2009 036 981.3 derselben Anmelderin verwiesen. Jede Werkzeug-Schnittstelle 44 kann auf an sich bekannte Weise in axialer Richtung der Werkzeugspindeln 28, 28' pneumatisch zugestellt werden. Insofern sei beispielsweise auf die Druckschriften EP-A-1 473 116, DE-A-10 2005 010 583 und EP-A-2 014 412 verwiesen, die auch den Aufbau und die Funktion geeigneter Polierteller bzw. -werkzeuge 46 offenbaren.

Ferner sind die Werkzeug-Schnittstellen 44 mittels der Werkzeugspindeln 28, 28' im Drehwinkel CNC-geregelt um Werkzeug-Drehachsen C, C' drehend antreibbar. Zur Erzeugung dieser Drehbewegung ist für beide Werkzeugspindeln 28, 28' gemeinsam ein Drehantrieb 48 (vgl. die Fig. 8 und 9) vorgesehen, der außerhalb des Arbeitsraums 26 am Schwenkjoch 36 angeflanscht ist und über einen im Schwenkjoch 36 aufgenommenen Riementrieb 50 mit den Werkzeugspindeln 28, 28' in Wirkverbindung steht. Dieser Riementrieb 50 ist in Fig. 9 gezeigt, wofür dort das Schwenkjoch 36 aufgebrochen dargestellt wurde.

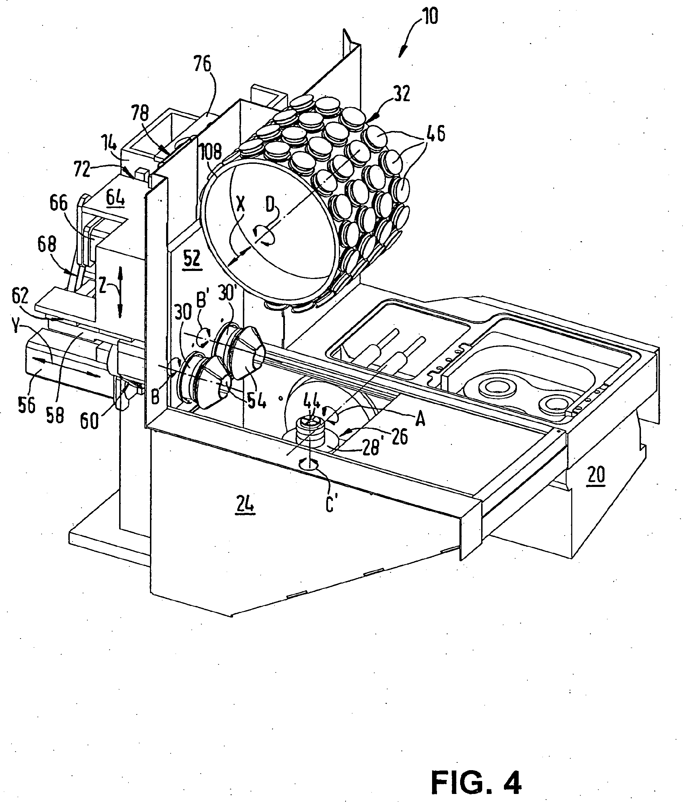

Einzelheiten zu den Werkstückspindeln 30, 30' sind insbesondere den Fig. 4, 6 und 7 zu entnehmen. Die horizontal liegenden Werkstückspindeln 30, 30' durchgreifen einen Z-Schieber 52, der den Arbeitsraum 26 in den Fig. 4, 6 und 7 nach links begrenzt, und ragen mit ihren Enden in den Arbeitsraum 26 hinein. Endseitig ist jede Werkstückspindel 30, 30' mit einer vorzugsweise pneumatisch betätigbaren, federbeaufschlagten Spannzange 54 versehen, die dazu dient, das auf einem Blockstück aufgeblockte Brillenglas L zu halten.

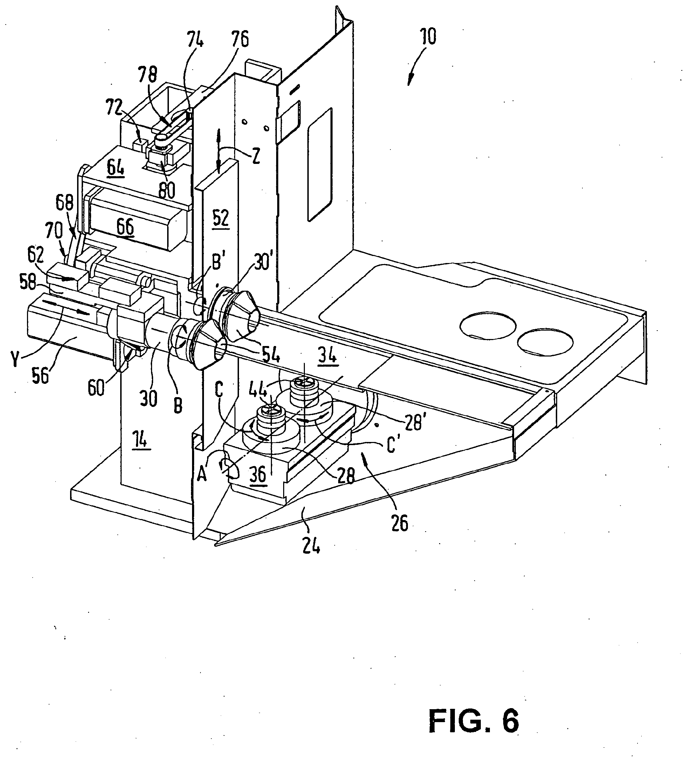

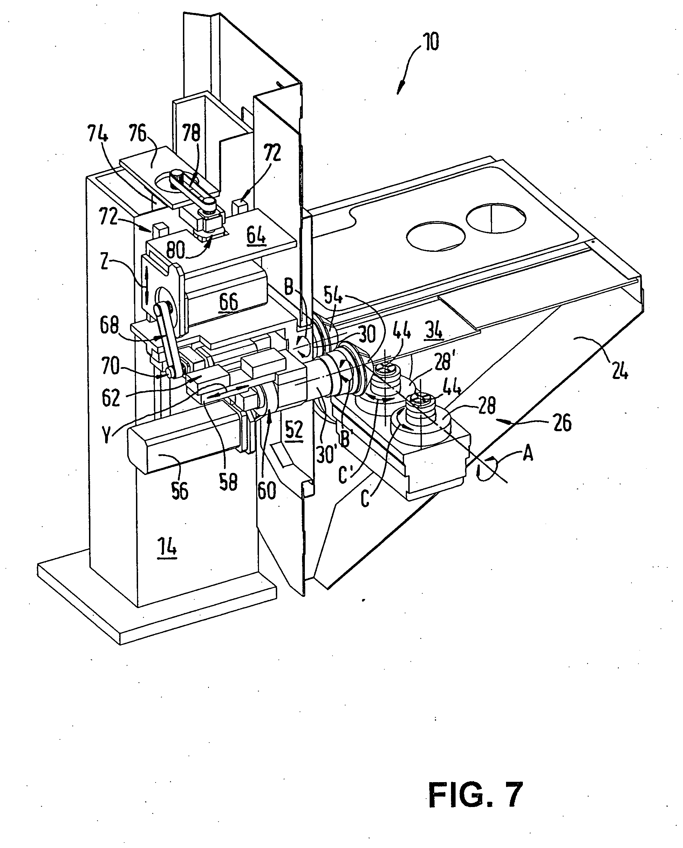

Die Spannzangen 54 sind mittels der Werkstückspindeln 30, 30' im Drehwinkel CNC-geregelt um Werkstück-Drehachsen B, B' drehend antreibbar. Zur Erzeugung dieser Drehbewegung ist für beide Werkstückspindeln 30, 30' gemeinsam ein Drehantrieb 56 vorgesehen, der zusammen mit den Werkstückspindeln 30, 30' an einem Y-Schlitten 58 befestigt ist und gemäß insbesondere den Fig. 6 und 7 mit den Werkstückspindeln 30, 30' über einen weiteren Riementrieb 60 wirkverbunden ist.

Die Werkstückspindeln 30, 30' können gemeinsam bezüglich des Arbeitsraums 26 entlang einer horizontalen Y-Achse CNC-lagegeregelt vor- und zurückfahren. Hierfür ist der Y-Schlitten 58 mittels Linearführungen 62 (siehe die Fig. 4, 6 und 7) längsverschieblich an einem Z-Schlitten 64 gehalten. Zur Erzeugung dieser Linearbewegung ist wiederum ein Drehantrieb 66 vorgesehen, der gemäß insbesondere den Fig. 6 und 7 im Z-Schlitten 64 angebracht und über einen Riementrieb 68 mit einem Spindeltrieb 70 für den Y-Schlitten 58 wirkverbunden ist.

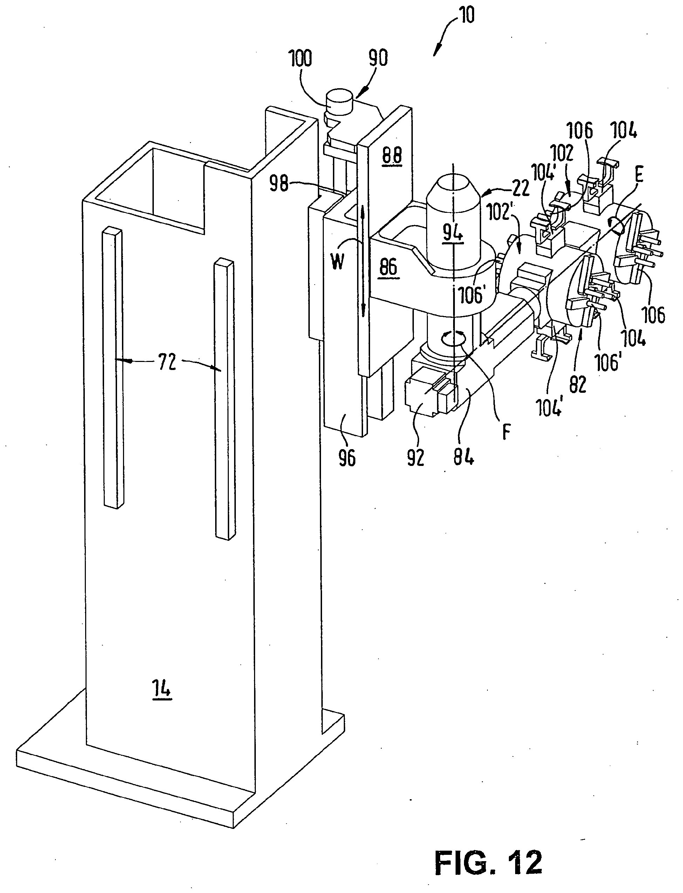

Ferner können die Werkstückspindeln 30, 30' gemeinsam bezüglich des Arbeitsraums 26 entlang einer vertikalen Z-Achse CNC-lagegeregelt hoch- und runterfahren. Zu diesem Zweck ist der Z-Schlitten 64 mittels Linearführungen 72 (vgl. die Fig. 3 bis 7 und 12) längsverschieblich an der Vertikalsäule 14 gehalten. Für die Erzeugung dieser Linearbewegung ist erneut ein Drehantrieb 74 vorgesehen, der über eine Flanschplatte 76 in der Vertikalsäule 14 an deren in den Figuren oberen Ende montiert ist. Der Drehantrieb 74 steht über einen weiteren Riementrieb 78 mit einem weiteren Spindeltrieb 80 für den Z-Schlitten 64 in Wirkverbindung.

Insoweit ist ersichtlich, dass die Feinbearbeitungsvorrichtung 10 beim Polieren z.B. mit einem sogenannten "Tangentialprozess" arbeiten kann, bei dem mittels der Schwenkachse A ein fester Winkel der Werkzeugspindeln 28, 28' eingestellt wird, worauf die Werkstückspindeln 30, 30' nach Zustellung in den Y- und Z-Achsen mittels der Z-Achse hoch- und runtergefahren werden, während sich die um die Werkzeug-Drehachsen C, C' drehangetriebenen Polierwerkzeuge 46 mit den um die Werkstück-Drehachsen B, B' vorzugsweise gleichsinnig und synchron drehangetriebenen Brillengläsern L in Bearbeitungseingriff befinden. Ein solcher Polierprozess ist in der älteren deutschen Patentanmeldung 10 2009 041 442.8 derselben Anmelderin detailliert beschrieben, auf die hiermit diesbezüglich Bezug genommen wird.

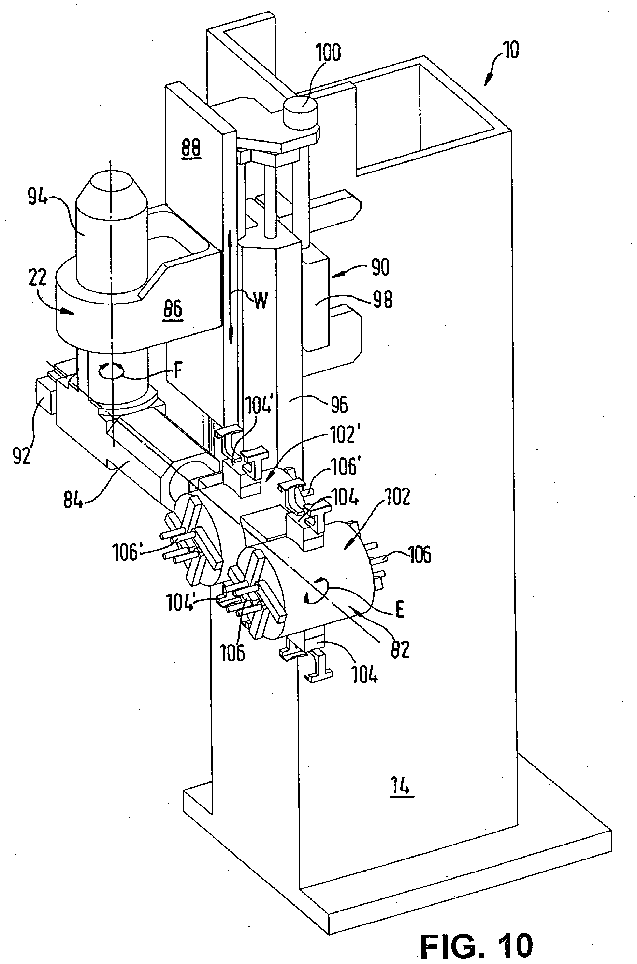

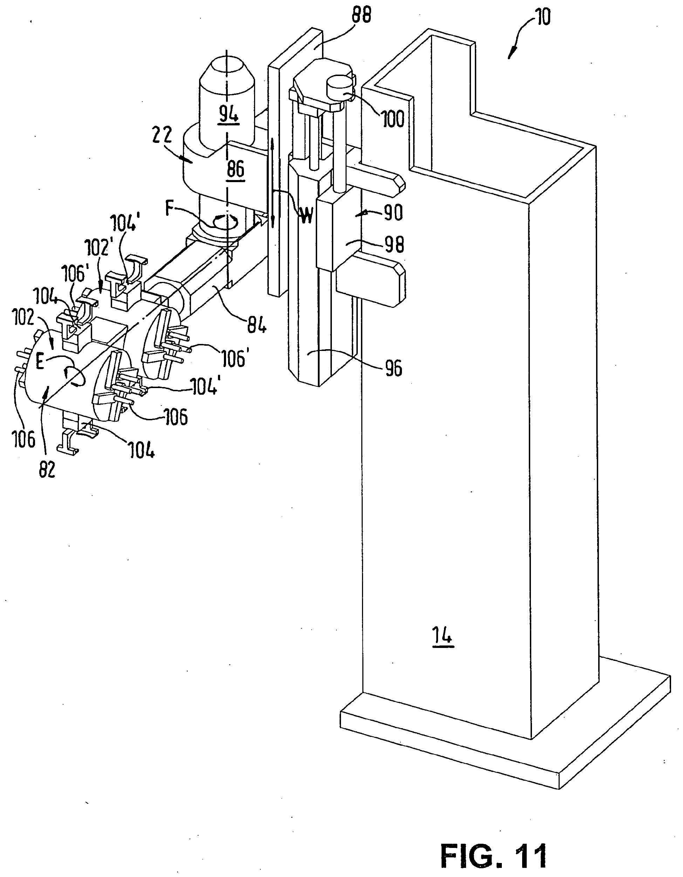

Weitere Details zu dem Ladesystem 22 sind insbesondere den Fig. 10 bis 12 zu entnehmen. Das Ladesystem 22 besitzt allgemein einen Ladekopf 82, einen Ladearm 84, eine Schwenkkonsole 86, einen W-Schlitten 88 und eine Aktuatoranordnung 90 für den W-Schlitten 88. Der Ladekopf 82 ist im Drehwinkel CNC-geregelt um eine horizontale Schwenkachse E schwenkbar am Ladearm 84 gelagert. Zur Erzeugung der Schwenkbewegung um die horizontale Schwenkachse E ist am vom Ladekopf 82 abgewandten Ende des Ladearms 84 ein Drehantrieb 92 (z.B. ein Hohlwellen-AC-Servomotor) angeflanscht, der über ein Harmonic-Drive-Getriebe (nicht gezeigt) im Ladearm 84 mit dem Ladekopf 82 wirkverbunden ist.

Der Ladearm 84 ist an der Schwenkkonsole 86 schwenkbar gelagert, und zwar im Drehwinkel CNC-geregelt um eine senkrecht zur Schwenkachse E verlaufende, vertikale Schwenkachse F. Für die Erzeugung der Schwenkbewegung um die vertikale Schwenkachse F ist ein Drehantrieb 94 (beispielsweise ein AC-Servomotor) vorgesehen, der oben auf der Schwenkkonsole 86 angeflanscht ist und über ein weiteres Harmonic-Drive-Getriebe (nicht dargestellt) in der Schwenkkonsole 86 mit dem Ladearm 84 in Wirkverbindung steht. Durch Verschwenken des Ladearms 84 um die vertikale Schwenkachse F kann der Ladekopf 82 wahlweise über das Transportsystem 16, die Waschstation 20 oder den Arbeitsraum 26 gebracht werden.

Die Schwenkkonsole 86 ist auf dem W-Schlitten 88 befestigt, der mittels der an der Vertikalsäule 14 angeflanschten Aktuatoranordnung 90 in vertikaler Bewegungsrichtung W hoch- und runterbewegt werden kann, um eine von insgesamt drei möglichen Vertikalpositionen einzunehmen. Hierfür besitzt die Aktuatoranordnung 90 einen pneumatisch betätigten Hauptaktuator 96 mit Führungen, der den W-Schlitten 88 entweder nach oben oder nach unten bewegt. Ferner weist die Aktuatoranordnung 90 einen pneumatisch betätigten Hilfsaktuator 98 auf, der dazu dient, einen Anschlag 100 für den W-Schlitten 88 zwischen zwei Endstellungen hoch- oder runterzubewegen. Befindet sich der vom Hilfsaktuator 98 betätigte Anschlag 100 in seiner oberen Endstellung, so kann der Hauptaktuator 96 den W-Schlitten 88 von einer unteren Vertikalposition des Ladesystems 22 in eine obere Vertikalposition des Ladesystems 22 bewegen, oder umgekehrt. Wird der Anschlag 100 vom Hilfsaktuator 98 hingegen in seine untere Endstellung verschoben, so kann der Hauptaktuator 96 den W-Schlitten 88 lediglich von der unteren Vertikalposition des Ladesystems 22 in eine mittlere Vertikalposition bzw. Zwischenposition des Ladesystems 22 bewegen, oder umgekehrt. Wie nachfolgend noch näher beschrieben werden wird, wirkt das Ladesystem 22 in seiner oberen Vertikalposition mit dem Werkzeugmagazin 32 zusammen, um Polierwerkzeuge 46 aus dem Werkzeugmagazin 32 zu entnehmen bzw. in diesem abzulegen. In der unteren Vertikalposition des Ladesystems 22 kann dieses Polierwerkzeuge 46 und/oder Brillengläser L an die Werkzeugspindeln 28, 28' bzw. die Werkstückspindeln 30, 30' übergeben oder von den jeweiligen Spindeln aufnehmen. Die mittlere Vertikalposition des Ladesystems 22 ist schließlich für dessen Schwenkbewegung um die vertikale Schwenkachse F vorgesehen.

Der Ladekopf 82 besteht im dargestellten Ausführungsbeispiel aus zwei nebeneinander bzw. in Richtung der horizontalen Schwenkachse E gesehen hintereinander angeordneten Ladeabschnitten 102, 102', die identisch ausgebildet sind und von denen bei der Bearbeitung eines Brillenglaspaares der eine Ladeabschnitt 102 beispielsweise der Bearbeitung des linken Brillenglases L zugeordnet ist, während der andere Ladeabschnitt 102' der Bearbeitung des rechten Brillenglases L zugeordnet ist. Jeder Ladeabschnitt 102, 102' besitzt zwei identisch ausgebildete, pneumatisch betätigbare Parallelgreifer 104 bzw. 104' für die Polierwerkzeuge 46 und zwei identisch ausgebildete, pneumatisch betätigbare Vierfingergreifer 106 bzw. 106' für die Brillengläser L, deren Finger die Brillengläser L am Umfang greifen und sich an beliebige Umfangskonturen der Brillengläser L anpassen können. In Umfangsrichtung um die horizontale Schwenkachse E gesehen folgen an jedem Ladeabschnitt 102, 102' ein erster Parallelgreifer 104 bzw. 104', ein erster Vierfingergreifer 106 bzw. 106', ein zweiter Parallelgreifer 104 bzw. 104' und ein zweiter Vierfingergreifer 106 bzw. 106' aufeinander, und zwar in kreuzförmiger Anordnung jeweils um 90° winkelbeabstandet. Entlang der horizontalen Schwenkachse E gesehen sind sämtliche Greifer 104, 106 bzw. 104', 106' jedes Ladeabschnitts 102 bzw. 102' so angeordnet, dass deren Greifmittelpunkte auf einer Höhe liegen. Mit anderen Worten gesagt liegen sämtliche Greifmittelpunkte des jeweiligen Ladeabschnitts 102 bzw. 102' in einer gedachten Ebene, die senkrecht zur horizontalen Schwenkachse E verläuft.

Weitere Einzelheiten des oberhalb des Arbeitsraums 26 angeordneten Werkzeugmagazins 32 sind insbesondere den Fig. 2 bis 5 zu entnehmen. Das Werkzeugmagazin 32 weist eine Werkzeug-Aufnahmetrommel 108 auf, an deren Außenumfang Aufnahmevorsprünge (nicht näher gezeigt) für die Polierwerkzeuge 46 vorgesehen sind. Im dargestellten Ausführungsbeispiel bilden jeweils vier Aufnahmevorsprünge eine zur Mittelachse der Werkzeug-Aufnahmetrommel 108 parallele Reihe von gleichbeabstandeten Aufnahmevorsprüngen, wobei insgesamt achtzehn solcher Reihen um die Mittelachse der Werkzeug-Aufnahmetrommel 108 gleichmäßig winkelbeabstandet über dem Umfang der Werkzeug-Aufnahmetrommel 108 verteilt sind. Die einzelnen Aufnahmevorsprünge auf der Werkzeug-Aufnahmetrommel 108 sind hierbei so ausgebildet, dass sie ein Polierwerkzeug 46 zu halten vermögen, wie es z.B. in der älteren deutschen Patentanmeldung 10 2009 036 981.3 derselben Anmelderin beschrieben ist. Der Abstand zwischen dem ersten und dem dritten bzw. dem zweiten und dem vierten Aufnahmevorsprung einer jeden Reihe entspricht dem axialen Abstand der durch die Greifmittelpunkte des jeweiligen Ladeabschnitts 102, 102' gebildeten Ebenen der Ladeabschnitte 102, 102' des Ladesystems 22 entlang der horizontalen Schwenkachse E, welcher wiederum dem Abstand der Werkzeug-Drehachsen C, C' der Werkzeugspindeln 28, 28' voneinander und dem Abstand der Werkstück-Drehachsen B, B' der Werkstückspindeln 30, 30' voneinander entspricht.

Die Werkzeug-Aufnahmetrommel 108 ist im Drehwinkel CNC-geregelt um eine Werkzeugmagazin-Drehachse D drehbar. Zur Erzeugung dieser Drehbewegung ist im Inneren der Werkzeug-Aufnahmetrommel 108 ein Drehantrieb 110 (beispielsweise ein AC-Servomotor) vorgesehen, der über ein Harmonic-Drive-Getriebe 112 (siehe Fig. 2) mit der Werkzeug-Aufnahmetrommel 108 wirkverbunden ist. Die Werkzeug-Aufnahmetrommel 108 mit Drehantrieb 110 und Harmonic-Drive-Getriebe 112 ist an einem pneumatisch betätigbaren Linearaktuator 114 montiert, der seinerseits über einen Halter 116 an der Vertikalsäule 14 befestigt ist. Der Linearaktuator 114 dient dazu, das Werkzeugmagazin 32 in einer horizontalen Richtung X zu bewegen, und zwar zwischen zwei Endstellungen, wobei in einer in Fig. 3 rechten Endstellung des Werkzeugmagazins 32 die Mittelachsen der in Richtung nach rechts gesehen ersten und dritten Aufnahmevorsprünge jeder Reihe von Aufnahmevorsprüngen jeweils in einer durch die Werkzeug- und Werkstück-Drehachsen C, B bzw. C', B' gebildeten Vertikalebene C-B bzw. C'-B' liegen, während in einer in Fig. 3 linken Endstellung des Werkzeugmagazins 32 die Mittelachsen der zweiten und vierten Aufnahmevorsprünge jeweils in der Vertikalebene C-B bzw. C'-B' liegen.

Schließlich ist zu dem Transportsystem 16 noch anzumerken, dass dieses einen Bandförderer (nicht näher gezeigt) umfasst, mittels dessen die Rezeptkästen 18 in einer horizontalen Richtung S in Fig. 1 nach links oder rechts bewegt werden können. Ferner weist das Transportsystem 16 als Übergabestelle für die Brillengläser L eine pneumatisch betätigte Hub-Schwenk-Einrichtung 118 auf, die dazu dient, eine Platte 120 für die Rezeptkästen 18 wahlweise in einer vertikalen Richtung T anzuheben bzw. abzusenken und/oder um eine vertikale Schwenkachse I um 90° zu verschwenken. Wie in Fig. 1 zu erkennen ist, hat die Platte 120 einen nach oben abgewinkelten Anschlag 122 für die Rezeptkästen 18. Genauer gesagt kann die Platte 120 mittels der Hub-Schwenk-Einrichtung 118 vertikal in drei verschiedene Höhenstellungen bewegt werden (Linearbewegung T), nämlich eine untere Stellung, in welcher der Anschlag 122 nicht in die Bewegungsbahn der Rezeptkästen 18 in Richtung S vorsteht, eine mittlere Stellung, in der der Anschlag 122 in die Bewegungsbahn der Rezeptkästen 18 vorsteht und somit deren Bewegung in Richtung S stoppen kann, und schließlich eine obere Stellung, in welcher sich die Platte 120 so weit über dem Transportsystem 16 befindet, dass sie mittels der Hub-Schwenk-Einrichtung 118 um 90° um die Schwenkachse I verschwenkt werden kann.

Wenngleich oben mehrfach der Einsatz von Harmonic-Drive-Getrieben beschrieben wurde, können statt dessen an den beschriebenen Einsatzorten natürlich auch Planetengetriebe oder andere Untersetzungsgetriebe verwendet werden.

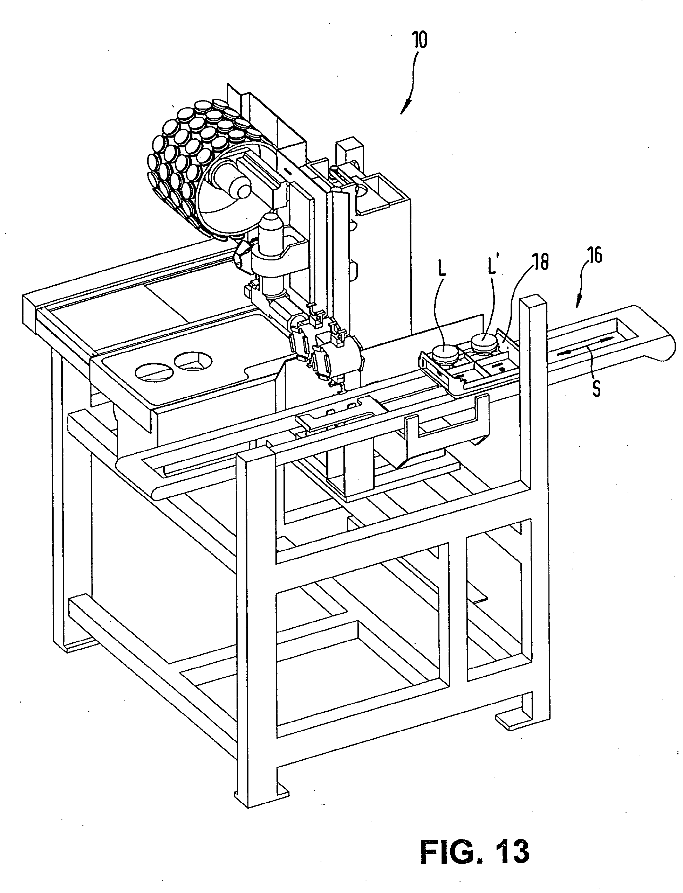

Anhand der Fig. 13 bis 49 soll nachfolgend ein möglicher, vollautomatischer Polierprozess mit der wie vorstehend beschrieben ausgebildeten Feinbearbeitungsvorrichtung 10 in seinem zeitlichen Ablauf erläutert werden, wobei in den Figuren der besseren Übersichtlichkeit halber lediglich die zur jeweiligen Figur beschriebenen Bezugszeichen eingezeichnet wurden.

Fig. 13: Das Transportsystem 16 fährt einen Rezeptkasten 18 mit einem darin aufgenommenen Paar von geblockten Brillengläsern L, L' in horizontaler Richtung (Linearbewegung S) in eine horizontale Ladeposition auf dem Transportsystem 16.

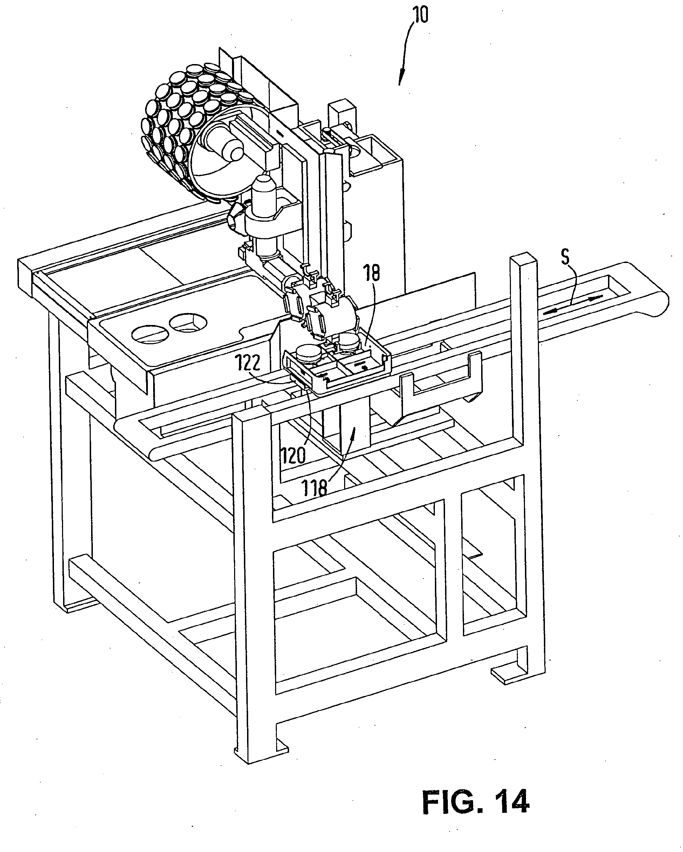

Fig. 14: Die Hub-Schwenk-Einrichtung 118 hält die Platte 120 in ihrer mittleren Höhenstellung, in der der Anschlag 122 in die horizontale Bewegungsbahn des Rezeptkastens 18 hineinragt, weshalb der Rezeptkasten 18 am Anschlag 122 anschlägt. Hierauf stoppt die horizontale Linearbewegung S.

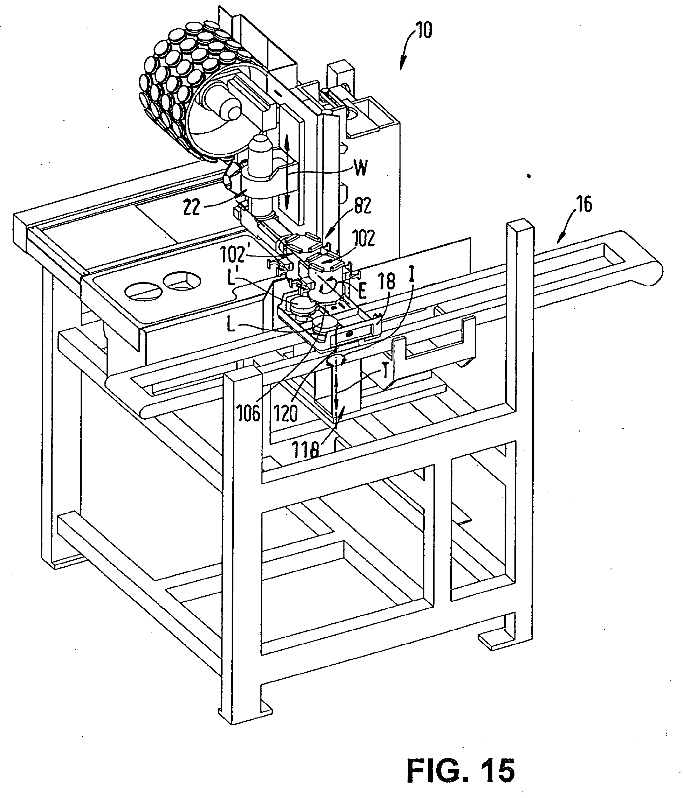

Fig. 15: Die Hub-Schwenk-Einrichtung 118 hat die Platte 120 in ihre obere Höhenstellung (vertikale Linearbewegung T am Transportsystem 16) gehoben und um 90° gegen den Uhrzeigersinn (Schwenkbewegung I am Transportsystem 16) gedreht, so dass die geblockten Brillengläser L, L' im Rezeptkasten 18 quer zum Transportsystem 16 stehen. Ferner wurde der Ladekopf 82 um 90° um die horizontale Schwenkachse E des Ladesystems 22 geschwenkt, so dass die Ladeabschnitte 102, 102' jeweils mit einem Vierfingergreifer 106, 106' den geblockten Brillengläsern L, L' gegenüberstehen. Das Ladesystem 22 befindet sich hierbei in seiner mittleren Vertikalposition (vertikale Linearbewegung W am Ladesystem 22).

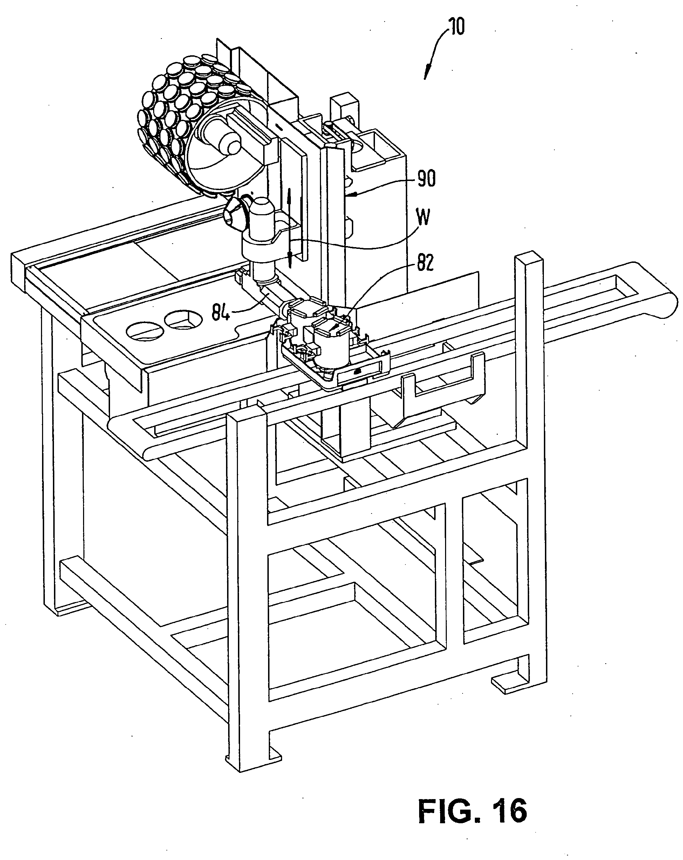

Fig. 16: Der Ladearm 84 mit Ladekopf 82 wurde vermittels der Aktuatoranordnung 90 in seine untere Vertikalposition verbracht (vertikale Linearbewegung W am Ladesystem 22). Die unteren Vierfingergreifer 106, 106' am Ladekopf 82 greifen die geblockten Brillengläser L, L' (in Fig. 16 nicht genau zu erkennen).

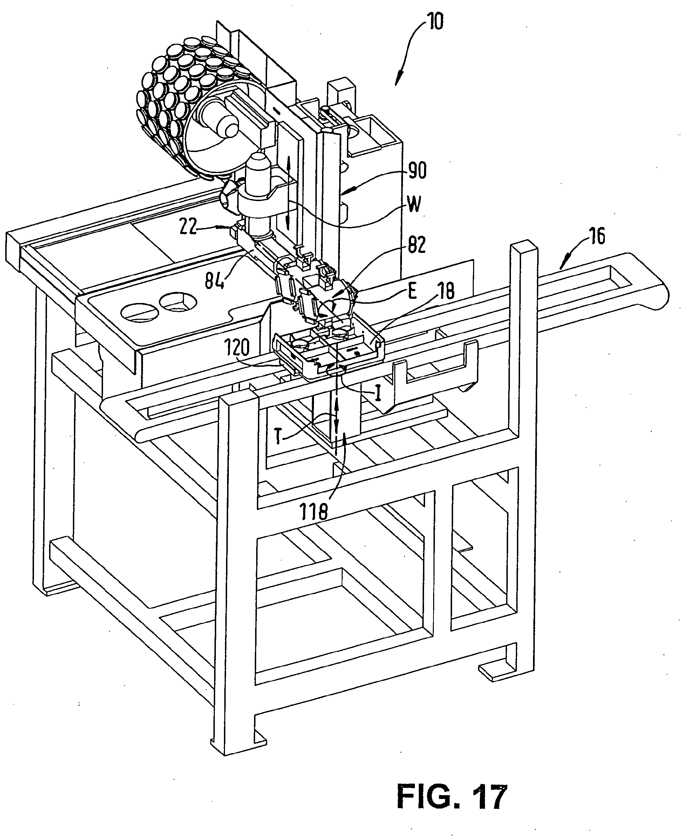

Fig. 17: Der Ladearm 84 mit Ladekopf 82 wurde vermittels der Aktuatoranordnung 90 in seine mittlere Vertikalposition angehoben (vertikale Linearbewegung W am Ladesystem 22), und der Ladekopf 82 wurde bezüglich des Ladearms 84 um 90° gegen den Uhrzeigersinn gedreht (horizontale Schwenkachse E des Ladesystems 22). Ferner wurde der auf der Platte 120 sitzende Rezeptkasten 18 mittels der Hub-Schwenk-Einrichtung 118 wieder in seine Lage gemäß Fig. 14 gedreht und abgesenkt (Schwenkbewegung I und vertikale Linearbewegung T am Transportsystem 16). Die geblockten Brillengläser L, L' befinden sich nun nicht mehr im Rezeptkasten 18, sondern werden vom Ladekopf 82 getragen.

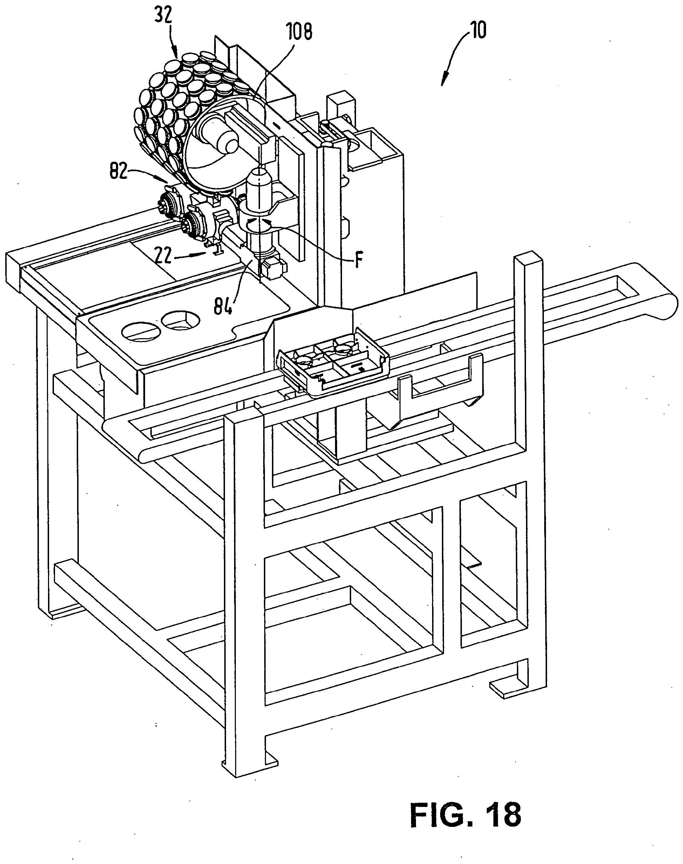

Fig. 18: Der Ladearm 84 mit Ladekopf 82 wurde um 180° um die vertikale Schwenkachse F des Ladesystems 22 geschwenkt, so dass sich der Ladekopf 82 unterhalb der Werkzeug-Aufnahmetrommel 108 des Werkzeugmagazins 32 befindet. Das Ladesystem 22 steht nach wie vor in seiner mittleren Vertikalposition.

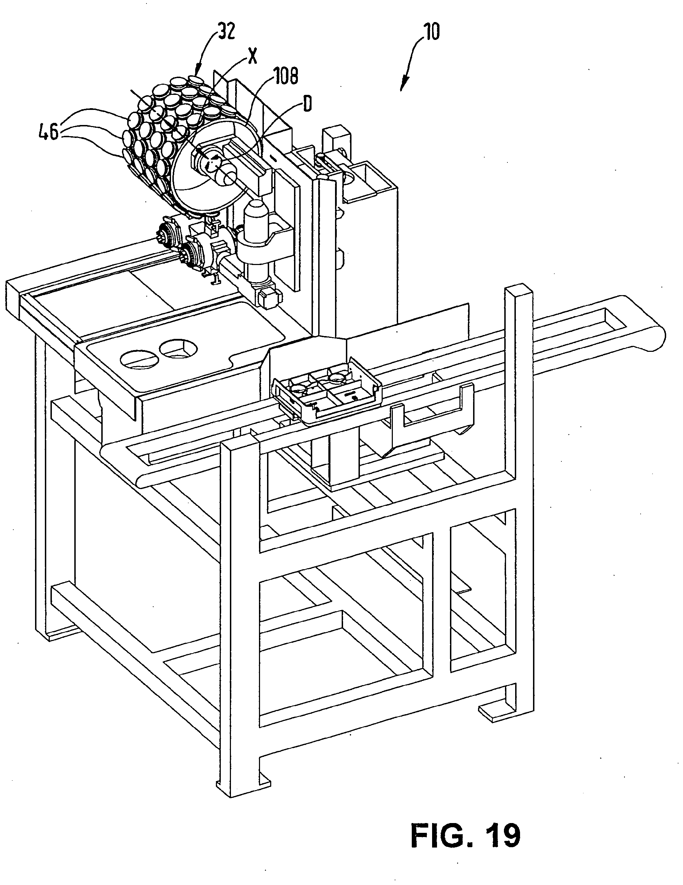

Fig. 19: Die Werkzeug-Aufnahmetrommel 108 des Werkzeugmagazins 32 hat sich um die horizontale Werkzeugmagazin-Drehachse D definiert gedreht und wurde - in diesem Fall - horizontal verschoben (Linearbewegung X des Werkzeugmagazins 32), um ein vorbestimmtes Paar von Polierwerkzeugen 46 bereitzustellen (unten bzw. am tiefsten Punkt der Werkzeug-Aufnahmetrommel 108).

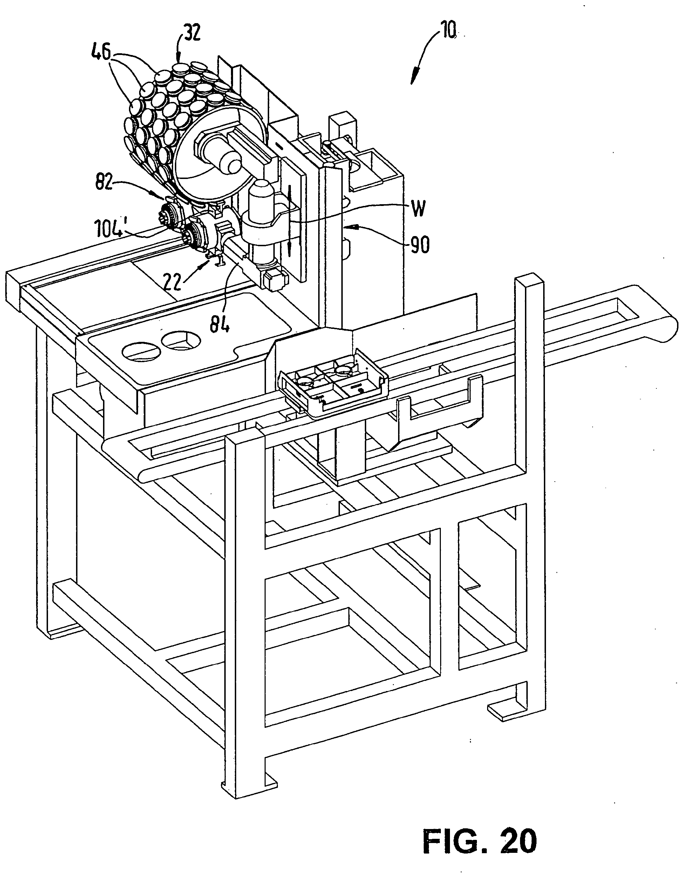

Fig. 20: Der Ladearm 84 mit Ladekopf 82 wurde vermittels der Aktuatoranordnung 90 aus seiner mittleren Vertikalposition angehoben (vertikale Linearbewegung W am Ladesystem 22), um mittels der hier oberen Parallelgreifer 104, 104' am Ladekopf 82 zwei vom Werkzeugmagazin 32 bereitgestellte Polierwerkzeuge 46 zu fassen.

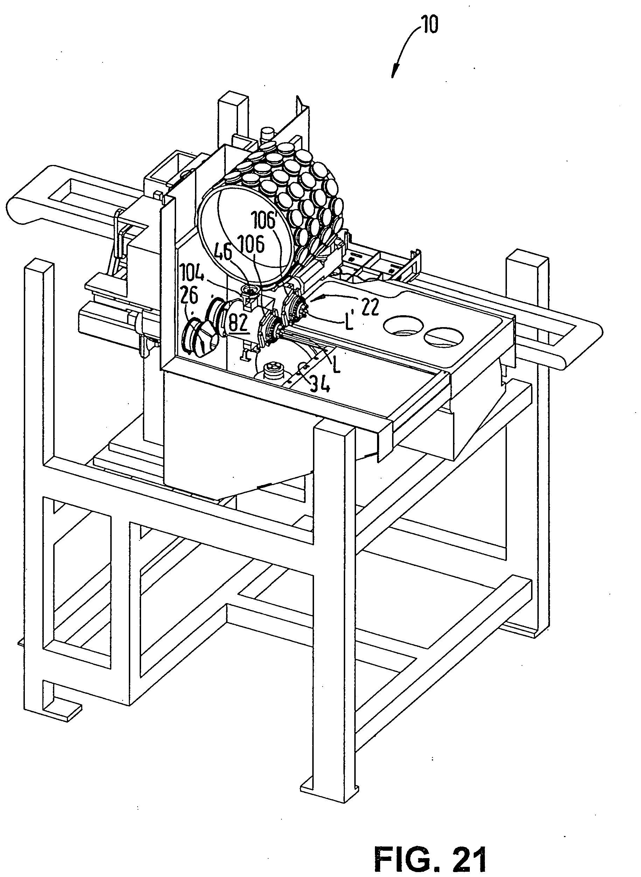

Fig. 21: Der den Arbeitsraum 26 abdeckende Schieber 34 wurde geöffnet, um einen Zugang zum Arbeitsraum 26 zu ermöglichen. Der Ladekopf 82 des Ladesystems 22 trägt nun zwei geblockte Brillengläser L, L' in einem der Vierfingergreiferpaare 106, 106' und zwei zugeordnete Polierwerkzeuge 46 in einem der Parallelgreiferpaare 104, 104'.

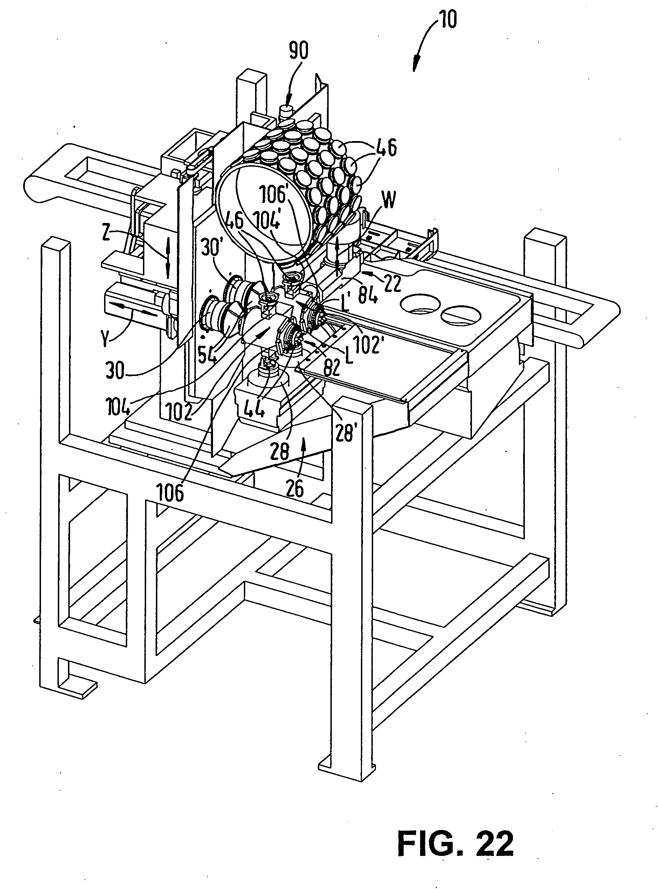

Fig. 22: In dieser Figur ist der Arbeitsraum 26 aufgebrochen dargestellt. Der Ladearm 84 mit Ladekopf 82 wurde vermittels der Aktuatoranordnung 90 nach unten gefahren (vertikale Linearbewegung W am Ladesystem 22), die Werkstückspindeln 30, 30' wurden in den Arbeitsraum 26 hineinbewegt (horizontale Linearachse Y) und es wird geprüft, ob sich an den Werkzeug-Schnittstellen 44 der Werkzeugspindeln 28, 28' bereits Polierwerkzeuge oder in den Spannzangen 54 der Werkstückspindeln 30, 30' schon geblockte Brillengläser befinden.

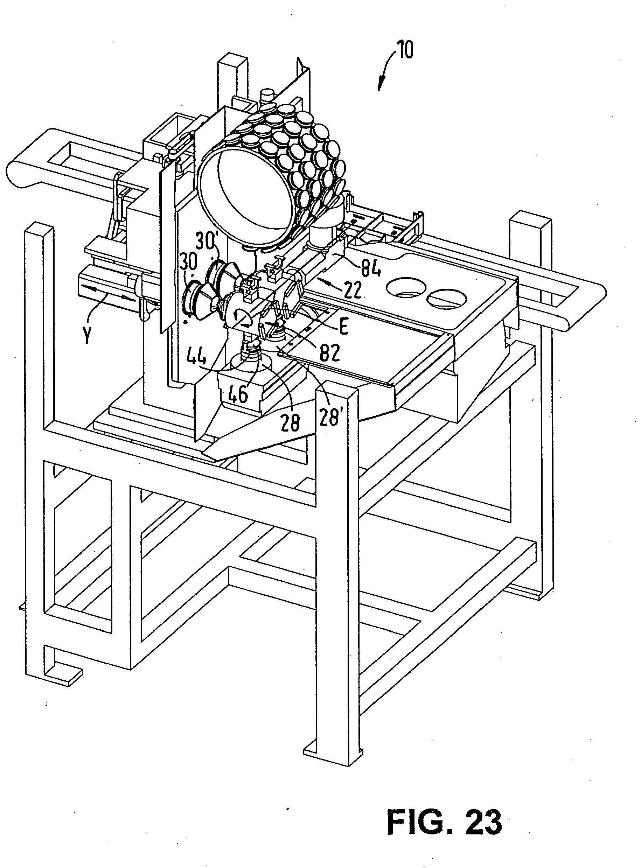

Fig. 23: Der Ladekopf 82 wurde bezüglich des Ladearms 84 um 180° geschwenkt (horizontale Schwenkachse E des Ladesystems 22), um die am Ladekopf 82 gefassten Polierwerkzeuge 46 den Werkzeugspindeln 28, 28' gegenüberzustellen und die Polierwerkzeuge 46 an die Werkzeug-Schnittstellen 44 zu übergeben. Die Werkstückspindeln 30, 30' haben sich wieder zurückbewegt (horizontale Linearachse Y der Werkstückspindeln 30, 30').

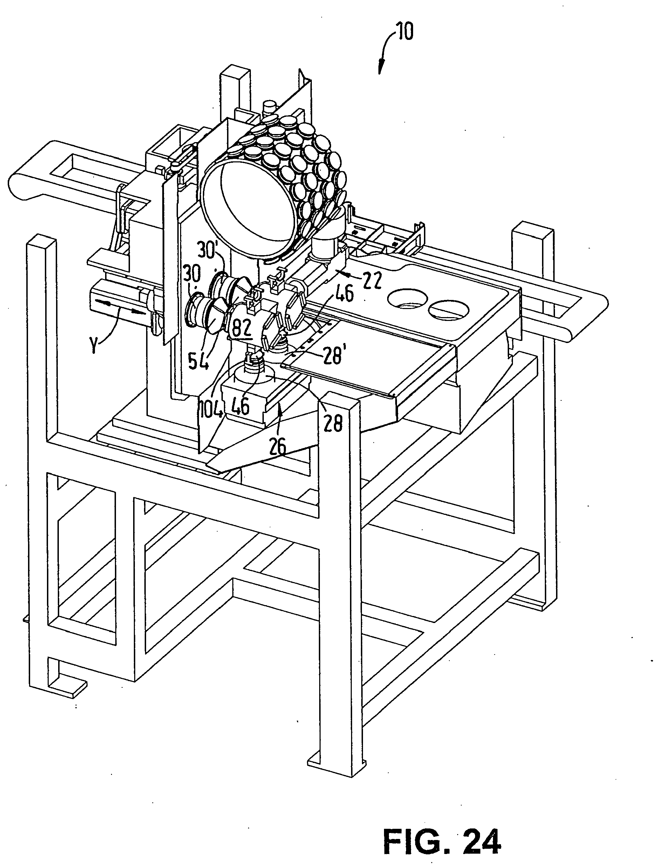

Fig. 24: Die Werkstückspindeln 30, 30' sind mit geöffneten Spannzangen 54 in den Arbeitsraum 26 hinein vorgefahren (horizontale Linearachse Y), die Spannzangen 54 greifen die geblockten Brillengläser L, L' an den Blockstücken, worauf die entsprechenden Vierfingergreifer 106, 106' am Ladekopf 82 des Ladesystems 22 die Brillengläser L, L' freigeben. Ferner wurden die Werkzeug-Schnittstellen 44 an den Werkzeugspindeln 28, 28' durch pneumatische Beaufschlagung der Unterkonstruktion angehoben, um die Polierwerkzeuge 46 an den Werkzeug-Schnittstellen 44 einzurasten, worauf die Parallelgreifer 104, 104' die Polierwerkzeuge 46 freigeben.

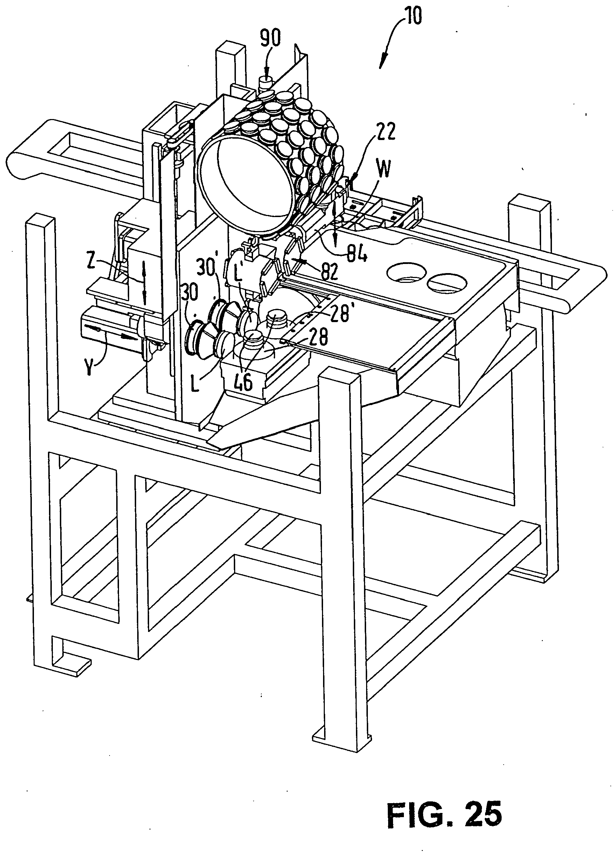

Fig. 25: Der Ladearm 84 mit dem leeren Ladekopf 82 wurde vermittels der Aktuatoranordnung 90 in die mittlere Vertikalposition angehoben (vertikale Linearbewegung W am Ladesystem 22). Die Werkzeugspindeln 28, 28' sind nun mit Polierwerkzeugen 46 bestückt, während die Werkstückspindeln 30, 30' mit Brillengläsern L, L' bestückt sind. Über die Bewegungsachsen des eigentlichen Pölierprozesses (horizontale Linearachse Y, vertikale Linearachse Z) wurden die Werkstückspindeln 30, 30' in die dargestellte hintere (Y), untere (Z) Grundstellung gefahren.

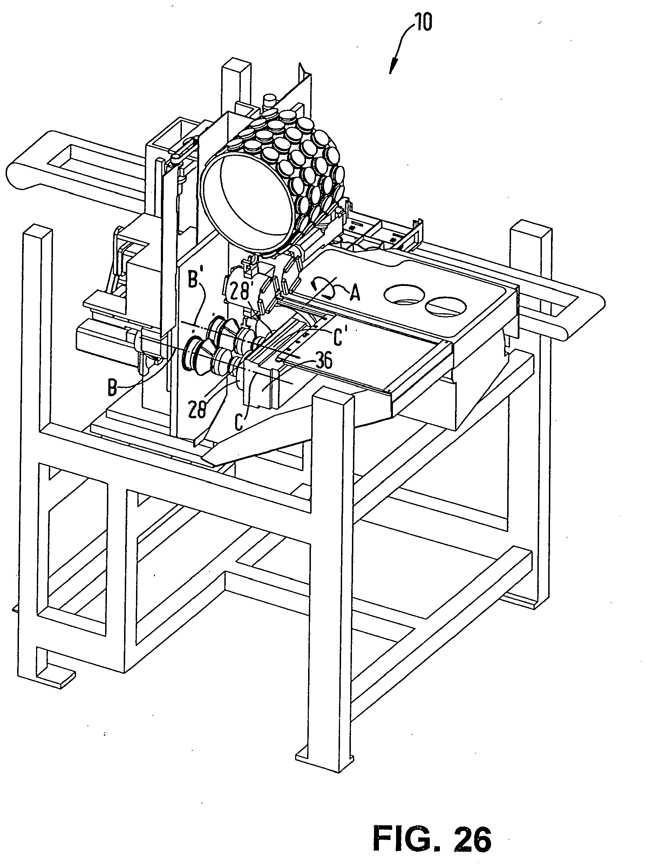

Fig. 26: Die Werkzeugspindeln 28, 28' wurden vermittels des Schwenkjochs 36 in ihre Arbeitsstellung mit vorbestimmter Winkellage der Werkzeug-Drehachsen C, C' bezüglich der Werkstück-Drehachsen B, B' verschwenkt (Schwenkachse A der Werkzeugspindeln 28, 28').

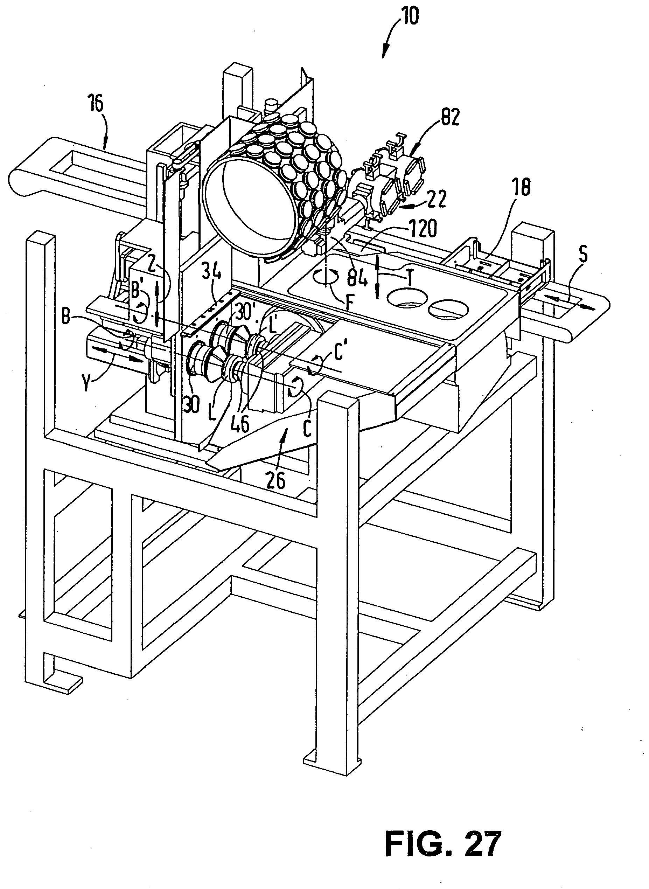

Fig. 27: Der Schieber 34 (hier nicht vollständig dargestellt) ist vorgefahren und verschließt den Arbeitsraum 26. Die Werkstückspindeln 30, 30' wurden zugestellt (horizontale Linearachse Y der Werkstückspindeln 30, 30'), worauf der eigentliche Polierprozess mit drehend angetriebenen Brillengläsern L, L' (Werkstück-Drehachsen B, B') und drehend angetriebenen Polierwerkzeugen 46 (Werkzeug-Drehachsen C, C') sowie einer linearen Arbeitsbewegung (vertikale Linearachse Z der Werkstückspindeln 30, 30') wie oben bereits kurz beschrieben - Stichwort "Tangentialprozess" - beginnt. Ferner wurde der Ladearm 84 mit Ladekopf 82 um 180° über das Transportsystem 16 zurückgeschwenkt (vertikale Schwenkachse F des Ladesystems 22). Im Transportsystem 16 wurde die Platte 120 mittels der Hub-Schwenk-Einrichtung 118 in ihre untere Stellung heruntergefahren (vertikale Linearbewegung T am Transportsystem 16), um den Weg für den leeren Rezeptkasten 18 freizugeben, der darauf in eine Warteposition in Fig. 27 nach rechts vorgefahren wurde (horizontale Linearbewegung S am Transportsystem 16).

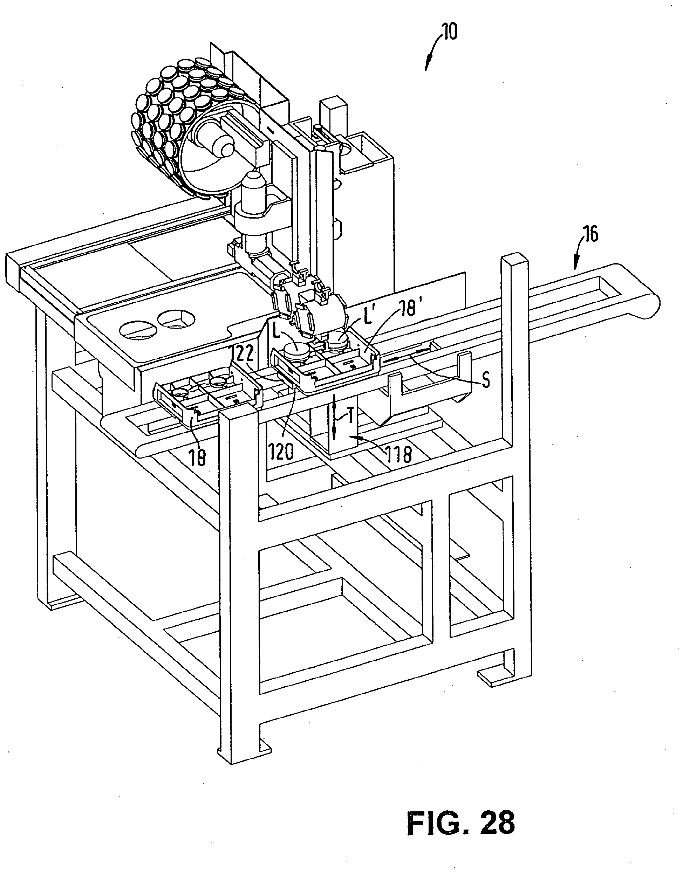

Fig. 28: Der leere Rezeptkasten 18 steht auf dem Transportsystem 16 in der angefahrenen Warteposition (links). Die Platte 120 mit Anschlag 122 wurde mittels der Hub-Schwenk-Einrichtung 118 hochgefahren (vertikale Linearbewegung T am Transportsystem 16), um einen mit neuen geblockten Brillengläsern L, L' bestückten, weiteren Rezeptkasten 18' in seiner Horizontalbewegung auf dem Transportsystem 16 (Linearbewegung S) in der horizontalen Ladeposition des Rezeptkastens 18' zu stoppen.

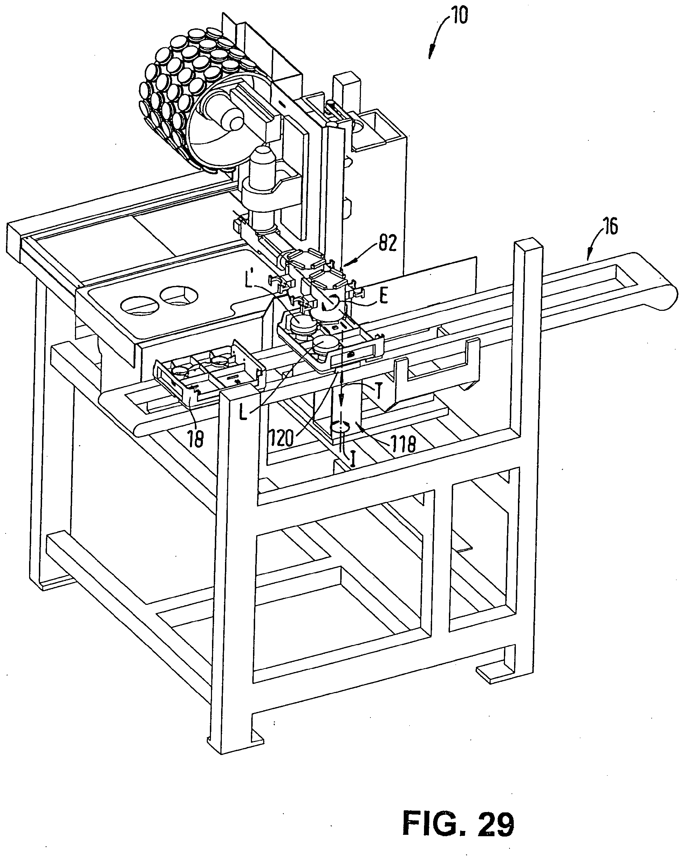

Fig. 29: Wie unter Bezugnahme auf die Fig. 15 bereits für den ersten Rezeptkasten 18 beschrieben, hat die Hub-Schwenk-Einrichtung 118 die Platte 120 in ihre obere Höhenstellung gehoben (vertikale Linearbewegung T am Transportsystem 16) und um 90° gegen den Uhrzeigersinn gedreht (Schwenkbewegung I am Transportsystem 16), so dass die neuen Brillengläser L, L' im weiteren Rezeptkasten 18 quer zum Transportsystem 16 stehen. Ferner wurde der Ladekopf 82 um 90° um die horizontale Schwenkachse E des Ladesystems 22 geschwenkt, um ein Paar der Vierfingergreifer 106, 106' am Ladekopf 82 (in Fig. 29 unten) den neuen Brillengläsern L, L' gegenüberzustellen.

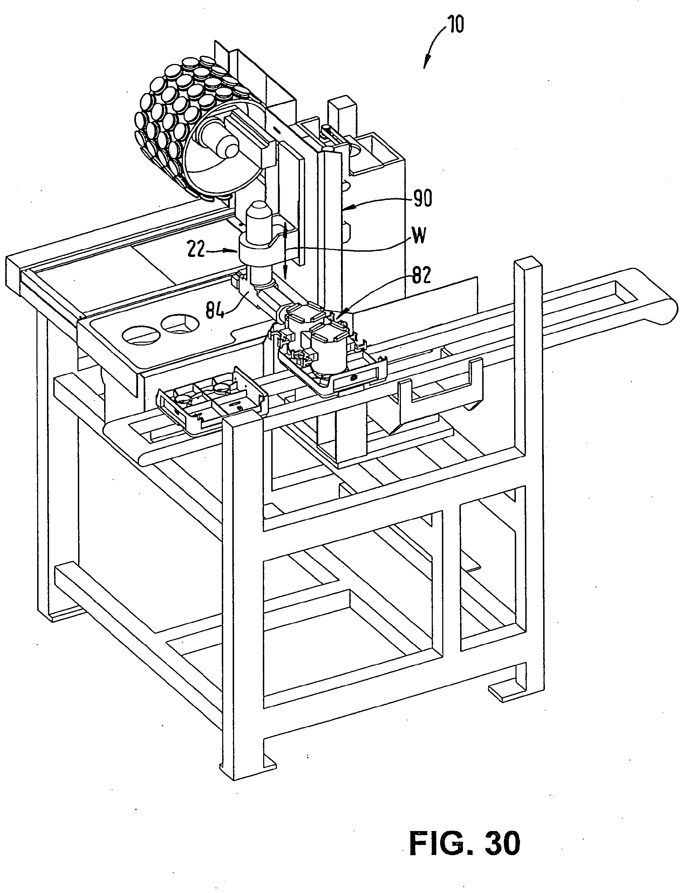

Fig. 30: Wie unter Bezugnahme auf die Fig. 16 für die alten Brillengläser L, L' schon beschrieben, wurde der Ladearm 84 mit Ladekopf 82 vermittels der Aktuatoranordnung 90 in seine untere Vertikalposition bewegt (vertikale Linearbewegung W am Ladesystem 22). Die unteren Vierfingergreifer 106, 106' am Ladekopf 82 greifen die neuen Brillengläser L, L' (in Fig. 30 nicht genau zu erkennen).

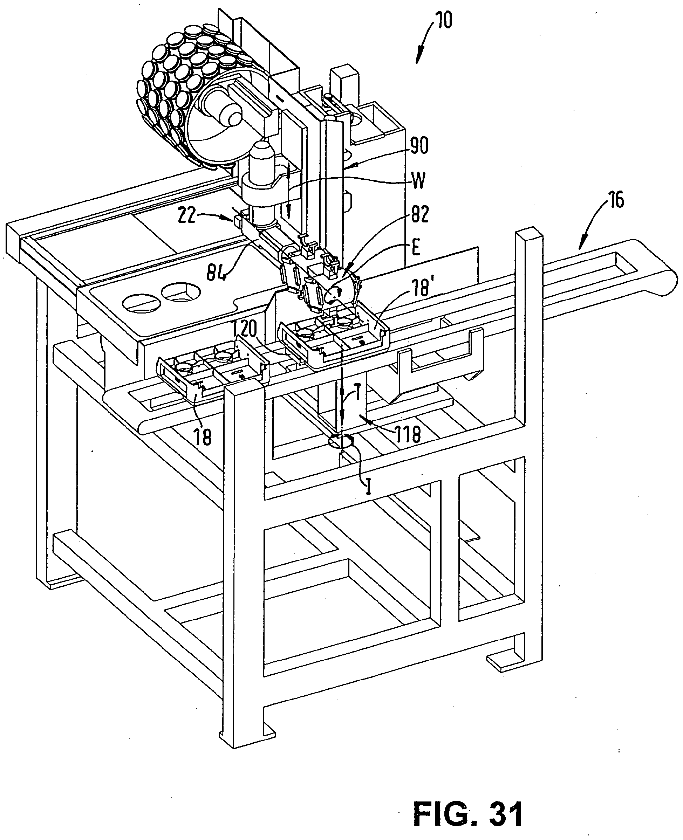

Fig. 31: Schritte analog der Fig. 17, nur für die neuen Brillengläser L, L' und den weiteren Rezeptkasten 18'. Der eigentliche Polierprozess für die alten Brillengläser L, L' läuft nach wie vor.

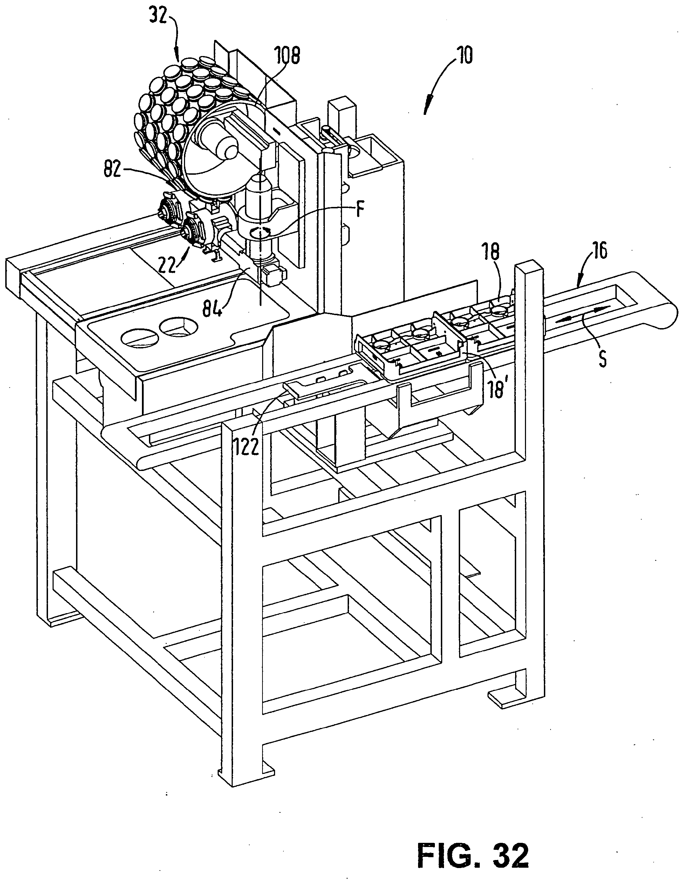

Fig. 32: Schritte analog der Fig. 18, nur für die neuen Brillengläser L, L'. Sowohl der erste Rezeptkasten 18 als auch der weitere Rezeptkasten 18' wurden vor den Anschlag 122 in Fig. 32 nach rechts zurückgefahren (horizontale Linearbewegung S am Transportsystem 16).

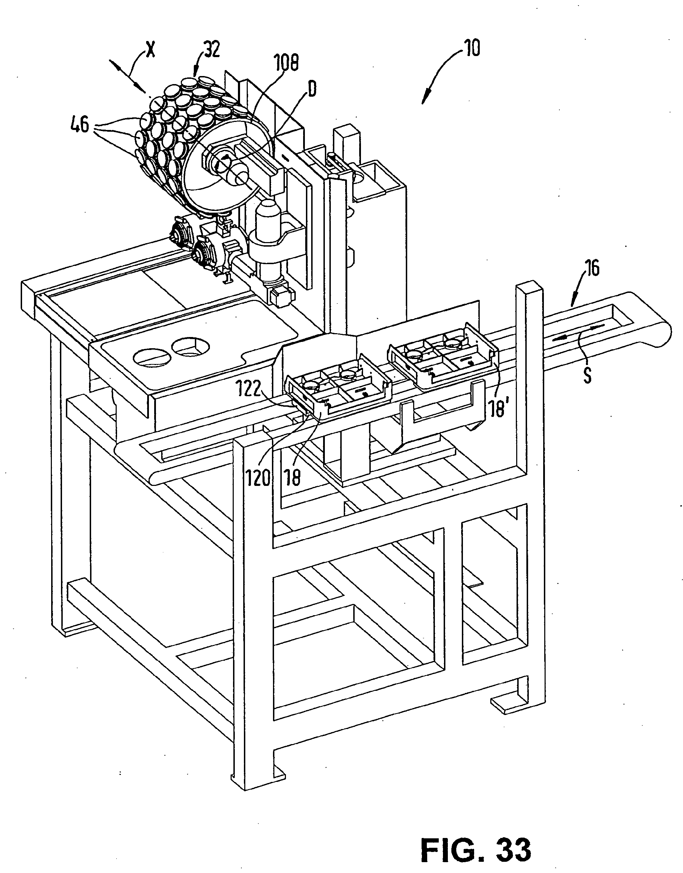

Fig. 33: Schritte analog der Fig. 19, diesmal nur für einen neuen Satz Polierwerkzeuge 46. Die Rezeptkästen 18, 18' wurden wieder in Fig. 33 nach links vorgefahren (horizontale Linearbewegung S am Transportsystem 16), so dass der erste Rezeptkasten 18 in der horizontalen Ladeposition am Anschlag 122 der Platte 120 anschlägt.

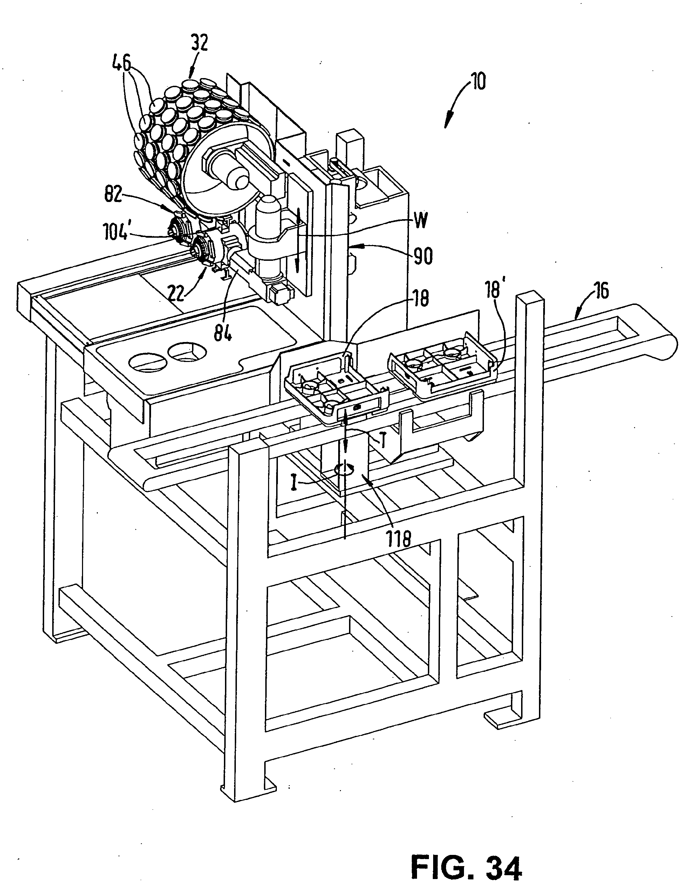

Fig. 34: Schritte analog der Fig. 20, nur mit einem neuen Satz Polierwerkzeuge 46. Zudem wurde der erste Rezeptkasten 18 mittels der Hub-Schwenk-Einrichtung 118 angehoben (vertikale Linearbewegung T am Transportsystem 16) und um 90° gedreht (Schwenkbewegung I am Transportsystem 16).

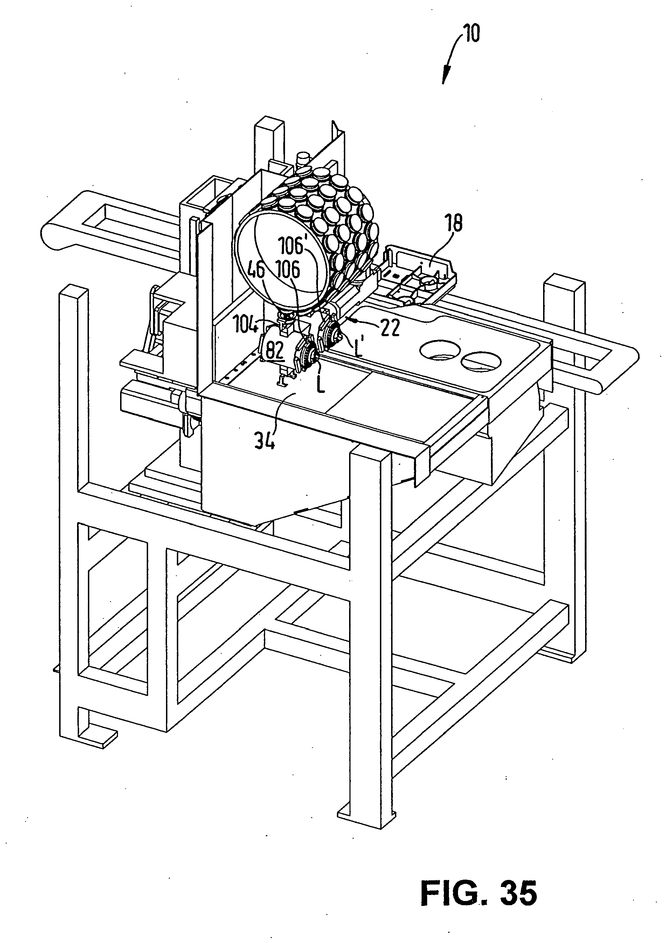

Fig. 35: Stellung des Ladesystems 22 analog der Fig. 21. Der eigentliche Polierprozess für die alten Brillengläser L, L' läuft nach wie vor; demgemäß verschließt der Schieber 34 den Arbeitsraum 26. Am Ladekopf 82 sind die neuen Brillengläser L, L' und die neuen Polierwerkzeuge 46 gehalten.

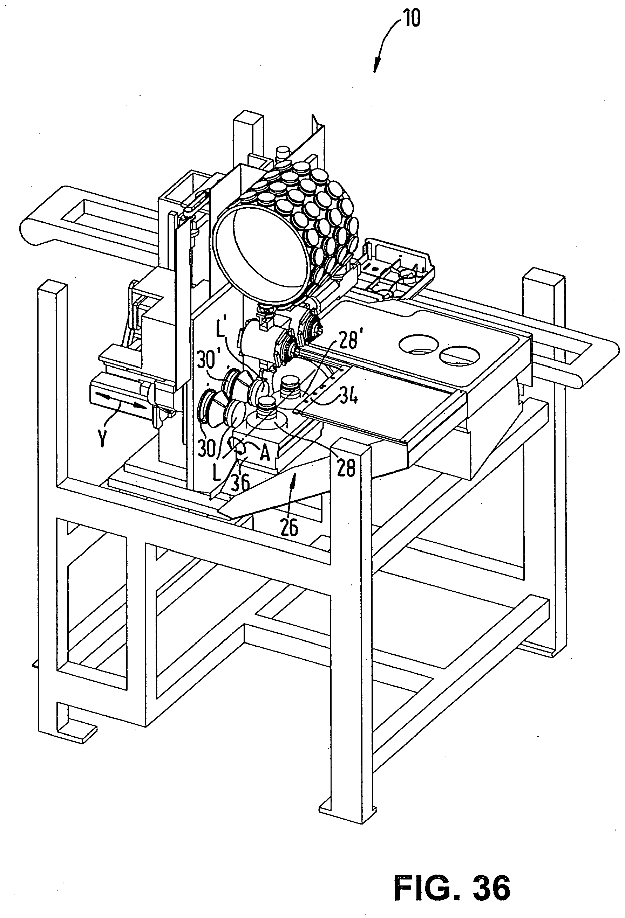

Fig. 36: Der eigentliche Polierprozess für die alten Brillengläser L, L' ist beendet; der Schieber 34 gibt den Arbeitsraum 26 frei. Die Werkzeugspindeln 28, 28' wurden vermittels des Schwenkjochs 36 in ihre Ladeposition zurückgeschwenkt (horizontale Schwenkachse A der Werkzeugspindeln 28, 28'). Die Werkstückspindeln 30, 30' wurden vom Arbeitsraum 26 zurückgezogen (horizontale Linearachse Y der Werkstückspindeln 30, 30').

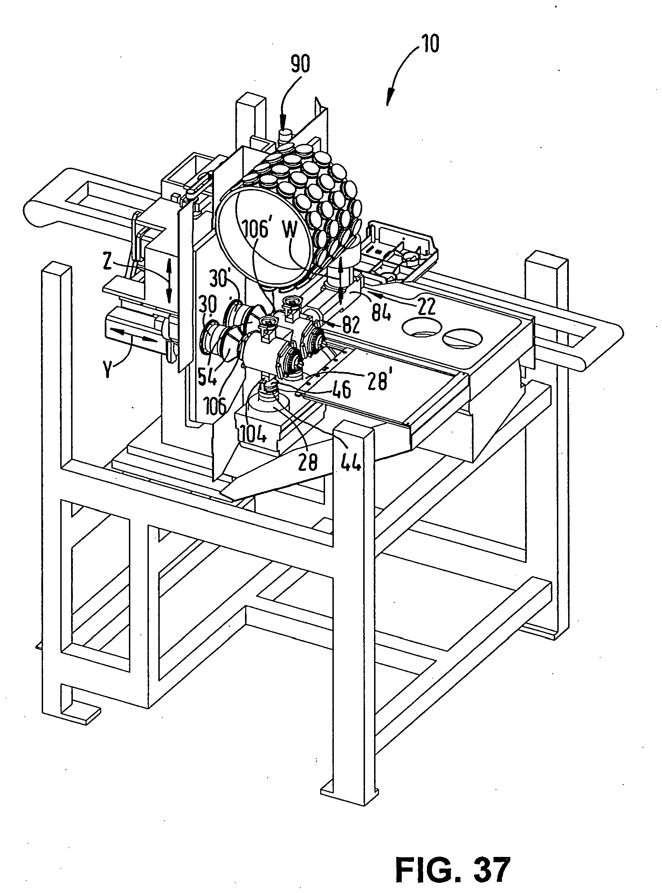

Fig. 37: Der Ladearm 84 mit Ladekopf 82 wurde vermittels der Aktuatoranordnung 90 nach unten gefahren (vertikale Linearbewegung W am Ladesystem 22). Die Werkstückspindeln 30, 30' wurden in ihre Lade- bzw. Entladeposition gefahren (vertikale Linearachse Z und horizontale Linearachse Y). Die bearbeiteten, alten Brillengläser L, L' werden von den Spannzangen 54 an das in Fig. 37 linke, freie Vierfingergreiferpaar 106, 106' am Ladekopf 82 übergeben, während die benutzten Polierwerkzeuge 46 unter pneumatischer Beaufschlagung der Unterkonstruktion von den Werkzeug-Schnittstellen 44 der Werkzeugspindeln 28, 28' an das in Fig. 37 untere, freie Parallelgreiferpaar 104, 104' am Ladekopf 82 übergeben werden.

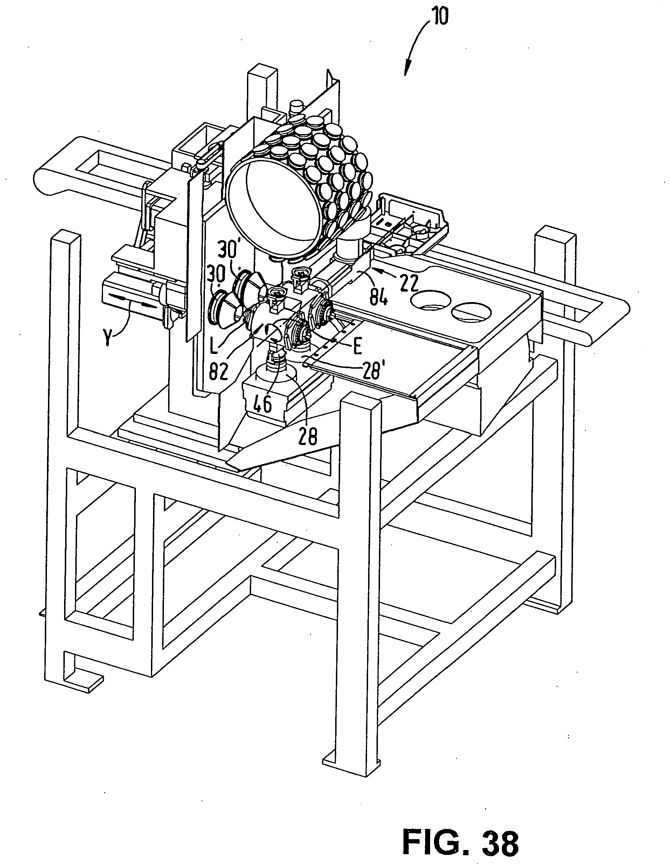

Fig. 38: Die Werkstückspindeln 30, 30' wurden zurückgefahren (horizontale Linearachse Y). Der Ladekopf 82 wurde bezüglich des Ladearms 84 um 180° gedreht (horizontale Schwenkachse E des Ladesystems 22), um die am Ladekopf 82 gehaltenen, neuen Brillengläser L, L' den Werkstückspindeln 30, 30' gegenüberzustellen und die ebenfalls am Ladekopf 82 gehaltenen, neuen Polierwerkzeuge 46 den Werkzeugspindeln 28, 28' gegenüberzustellen. Jetzt können die neuen Brillengläser L, L' an die Werkstückspindeln 30, 30' und die neuen Polierwerkzeuge 46 an die Werkzeugspindeln 28, 28' übergeben werden, analog der Beschreibung zur Fig. 24.

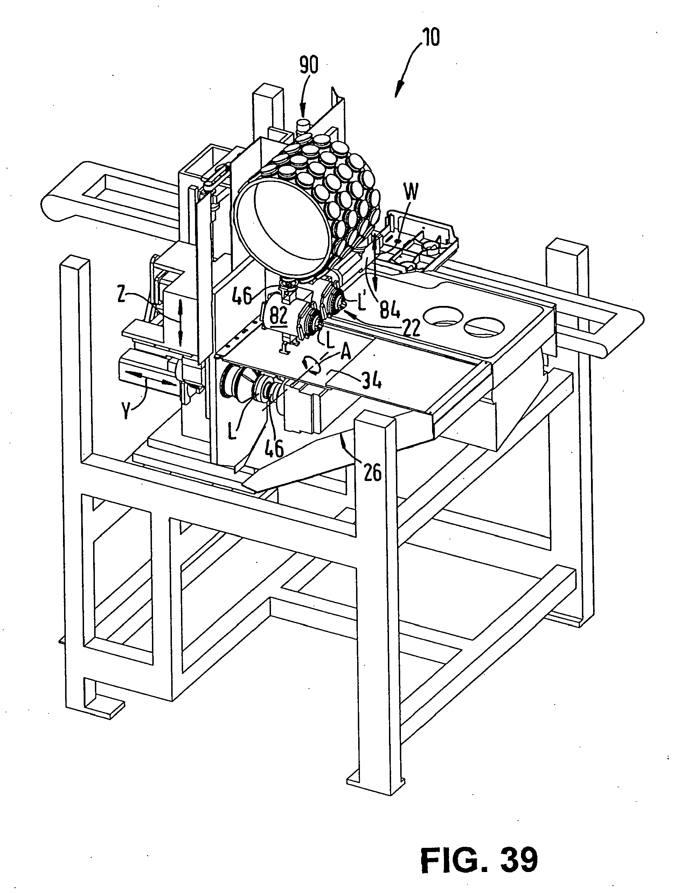

Fig. 39: Der Schieber 34 verschließt den Arbeitsraum 26, in dem für die neuen Brillengläser L, L' der eigentliche Polierprozess mit den neuen Polierwerkzeugen 46 beginnt (vgl. die Beschreibung zu den Fig. 25 bis 27; horizontale Linearachse Y, vertikale Linearachse Z, horizontale Schwenkachse A). Der Ladearm 84 mit Ladekopf 82, welcher sowohl die bearbeiteten, alten Brillengläser L, L' (in Fig. 39 rechts) als auch die benutzten, alten Polierwerkzeuge 46 (in Fig. 39 oben) trägt, wurde vermittels der Aktuatoranordnung 90 nach oben, in die mittlere Vertikalposition des Ladesystems 22 gefahren (vertikale Linearbewegung W am Ladesystem 22).

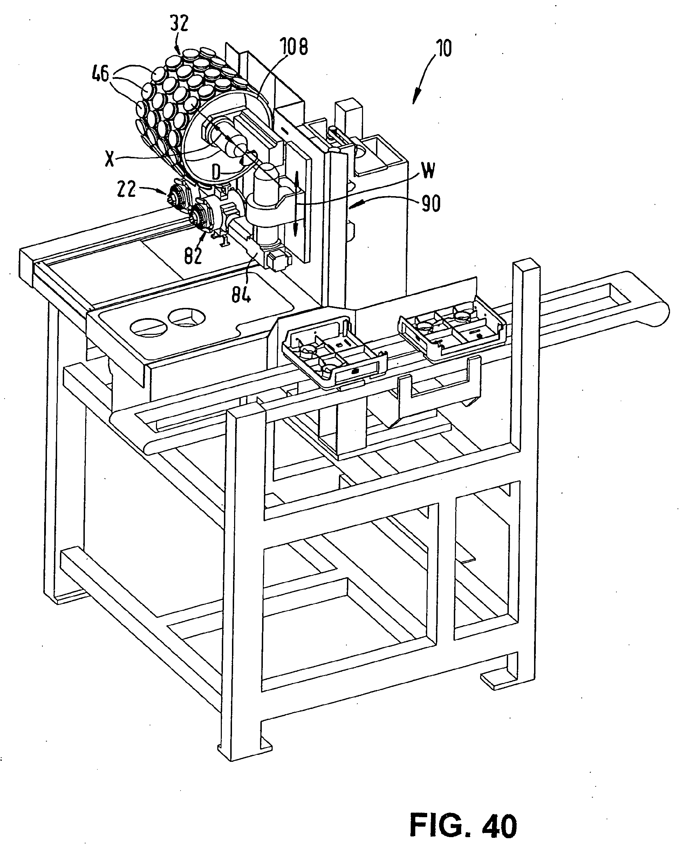

Fig. 40: Die Werkzeug-Aufnahmetrommel 108 des Werkzeugmagazins 32 wurde geeignet gedreht und/oder axial verschoben (horizontale Werkzeugmagazin-Drehachse D, horizontale Linearbewegung X des Werkzeugmagazins 32), um zwei freie Werkzeugaufnahmevorsprünge auf der Werkzeug-Aufnahmetrommel 108 über dem Ladekopf 82 zu positionieren. Der Ladearm 84 mit Ladekopf 82 wurde dann vermittels der Aktuatoranordnung 90 in die obere Vertikalposition angehoben (vertikale Linearbewegung W am Ladesystem 22), um die benutzten, alten Polierwerkzeuge 46 im Werkzeugmagazin 32 abzulegen.

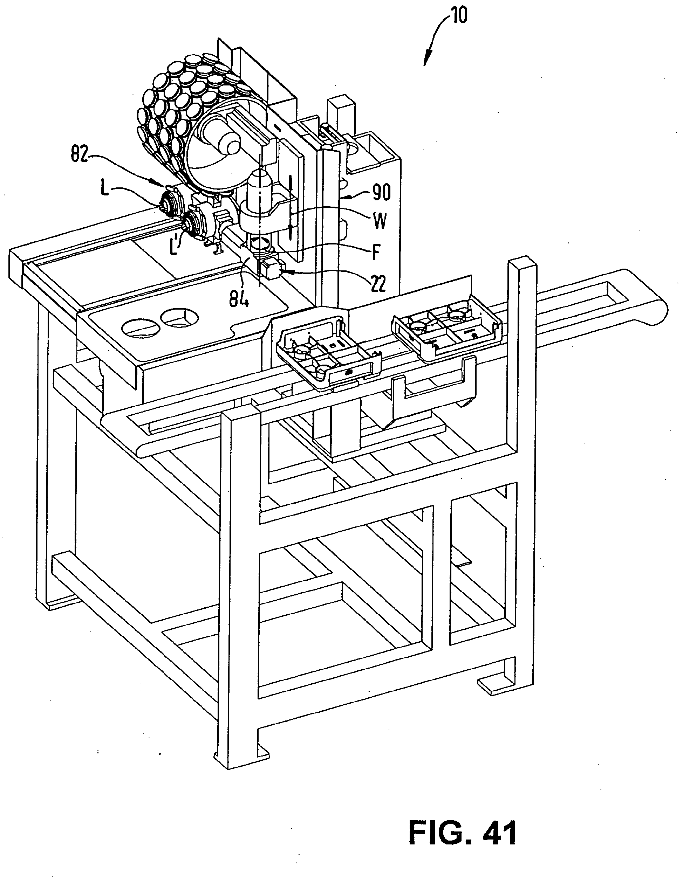

Fig. 41: Der Ladearm 84 mit Ladekopf 82 wurde mittels der Aktuatoranordnung 90 in die mittlere Vertikalposition abgesenkt (vertikale Linearbewegung W am Ladesystem 22), um für einen Schwenk um die Hochachse bereit zu sein (vertikale Schwenkachse F des Ladesystems 22). Der Ladekopf 82 trägt nur noch die bearbeiteten, alten Brillengläser L, L'.

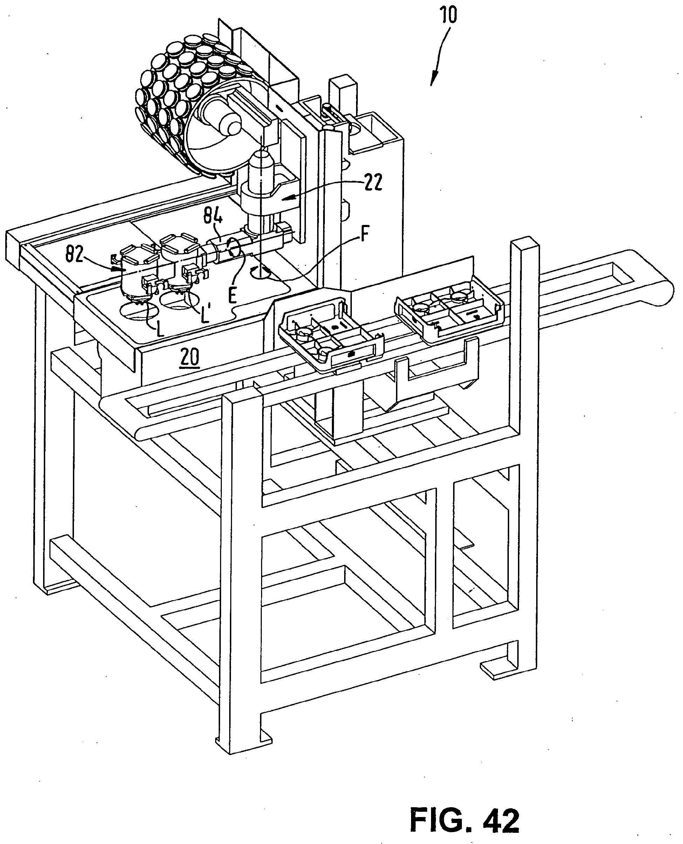

Fig. 42: Der Ladekopf 82 wurde um 90° um die vertikale Schwenkachse F des Ladesystems 22 verschwenkt. Zudem wurde der Ladekopf 82 bezüglich des Ladearms 84 um 90° um die horizontale Schwenkachse E des Ladesystems 22 verschwenkt, um die am Ladekopf 82 gehaltenen, bearbeiteten Brillengläser L, L' (unten in Fig. 42) über der Waschstation 20 zu positionieren.

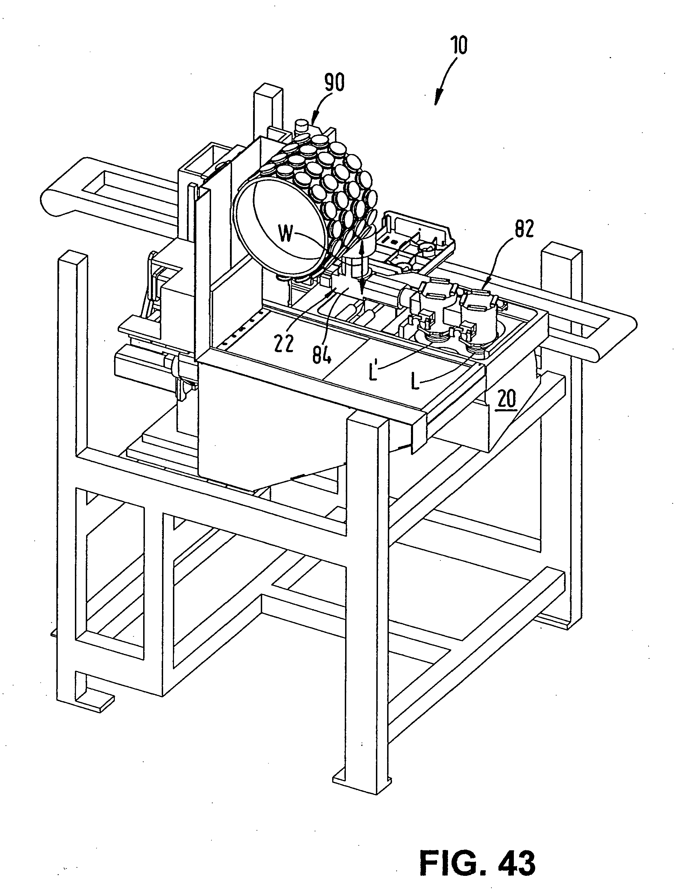

Fig. 43: Der Ladearm 84 mit Ladekopf 82 wurde vermittels der Aktuatoranordnung 90 in die untere Vertikalposition abgesenkt (vertikale Linearbewegung W am Ladesystem 22), um die bearbeiteten Brillengläser L, L' in die Waschstation 20 einzulegen.

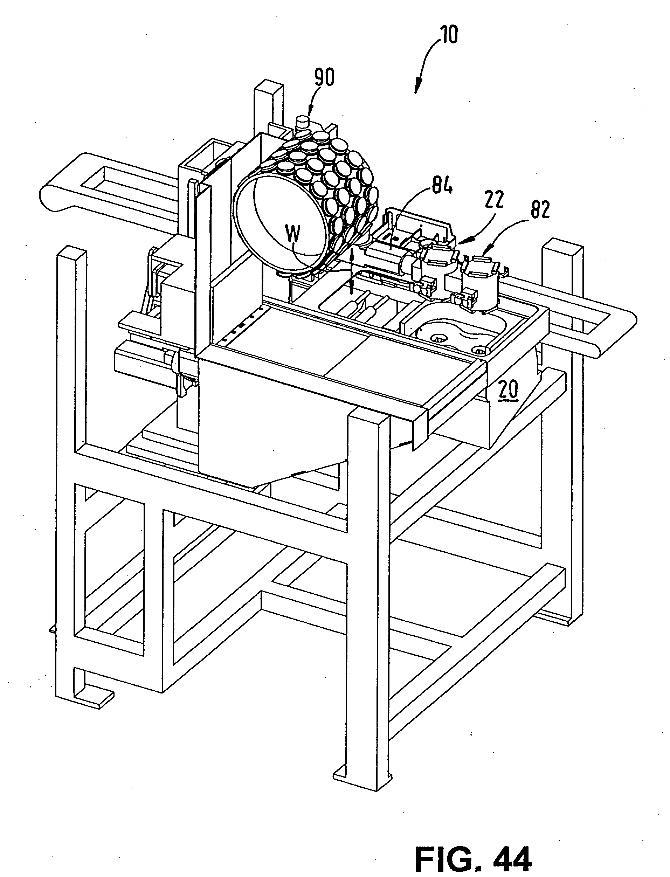

Fig. 44: Der Ladearm 84 mit Ladekopf 82 wurde vermittels der Aktuatoranordnung 90 wieder in die mittlere Vertikalposition angehoben (vertikale Linearbewegung W am Ladesystem 22), und die bearbeiteten Brillengläser L, L' werden in der Waschstation 20 auf an sich bekannte Weise gewaschen und getrocknet.

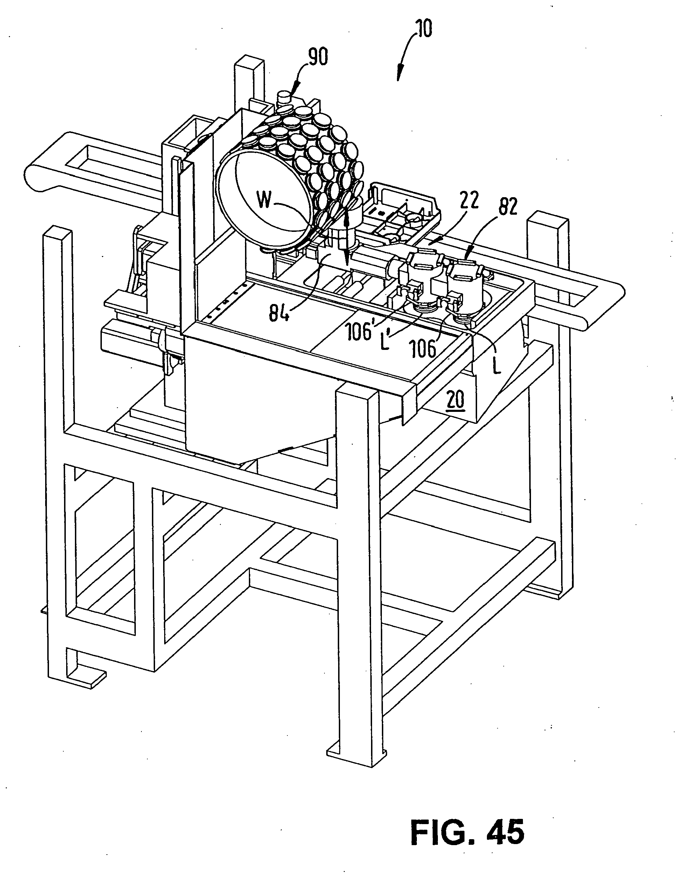

Fig. 45: Der Ladearm 84 mit Ladekopf 82 wurde vermittels der Aktuatoranordnung 90 wieder in die untere Vertikalposition abgesenkt (vertikale Linearbewegung W am Ladesystem 22), um die bearbeiteten, gewaschenen und getrockneten Brillengläser L, L' mittels der in Fig. 45 unteren Vierfingergreifer 106, 106' in der Waschstation 20 zu ergreifen und aus der Waschstation 20 zu entnehmen.

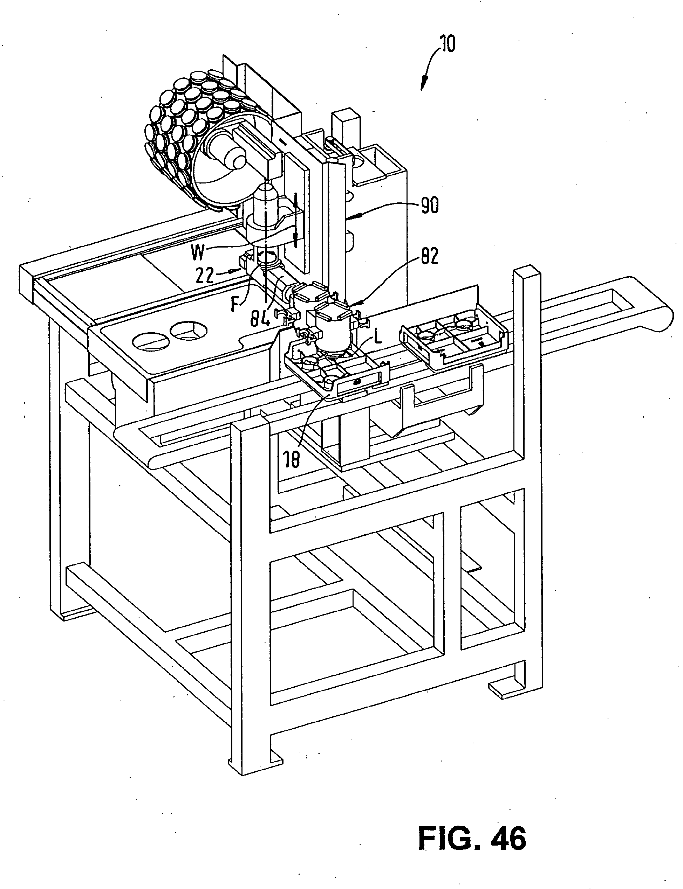

Fig. 46: Der Ladearm 84 mit Ladekopf 82 wurde vermittels der Aktuatoranordnung 90 wieder in die mittlere Vertikalposition angehoben (vertikale Linearbewegung W am Ladesystem 22), und der Ladekopf 82 wurde um 90° um die vertikale Schwenkachse F des Ladesystems 22 geschwenkt, um die am Ladekopf 82 gehaltenen, bearbeiteten, gewaschenen und getrockneten Brillengläser L, L' über dem ersten Rezeptkasten 18 zu positionieren.

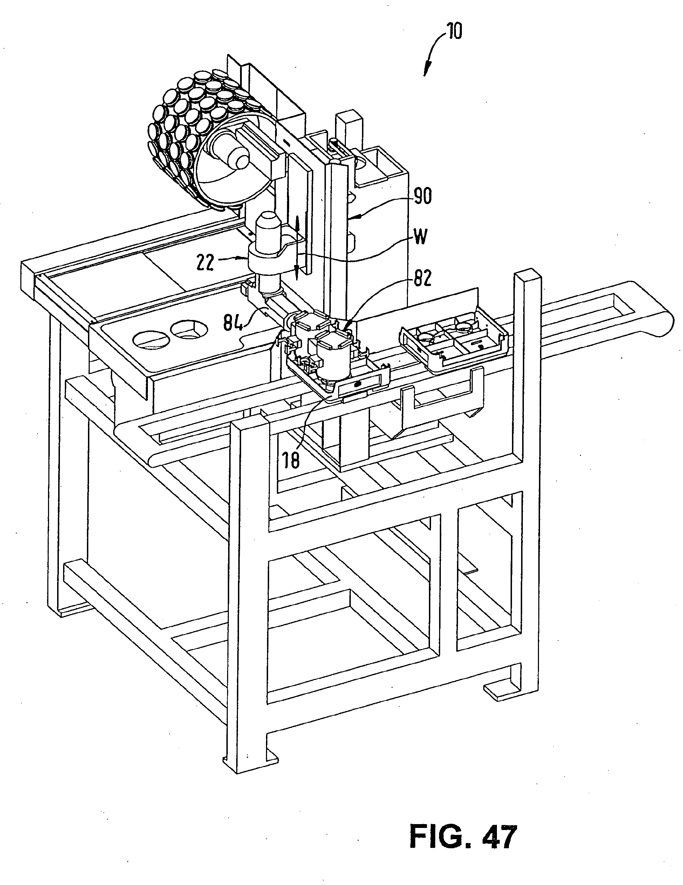

Fig. 47: Der Ladearm 84 mit Ladekopf 82 wurde vermittels der Aktuatoranordnung 90 in die untere Vertikalposition abgesenkt (vertikale Linearbewegung W am Ladesystem 22), um die fertigen Brillengläser L, L' im ersten Rezeptkasten 18 abzulegen.

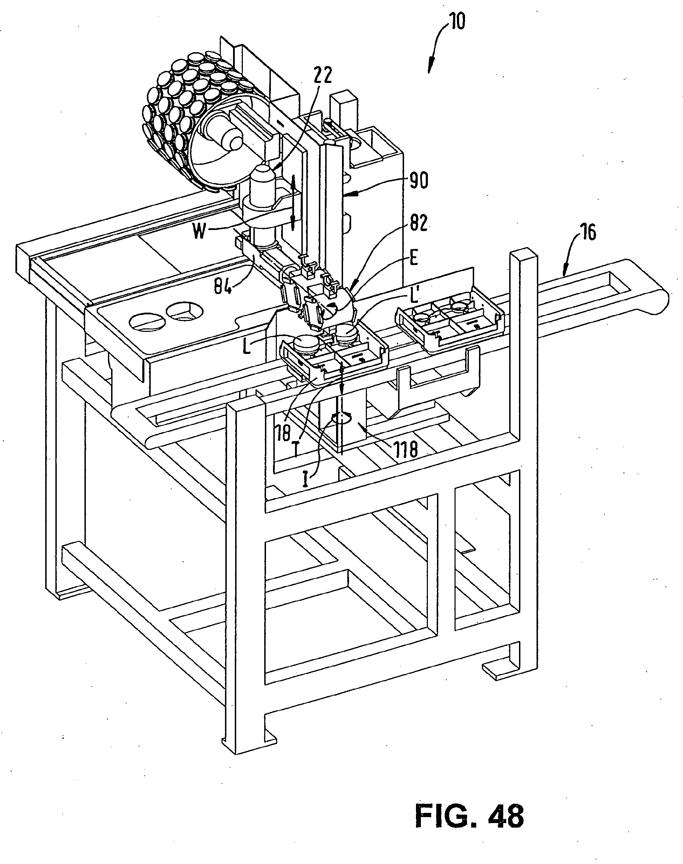

Fig. 48: Der Ladearm 84 mit Ladekopf 82 wurde nach Ablegen der Brillengläser L, L' im ersten Rezeptkasten 18 vermittels der Aktuatoranordnung 90 wieder in die mittlere Vertikalposition angehoben (vertikale Linearbewegung W am Ladesystem 22), und der Ladekopf 82 wurde bezüglich des Ladearms 84 um 90° um die horizontale Schwenkachse E des Ladesystems 22 geschwenkt. Der erste Rezeptkasten 18 wurde mittels der Hub-Schwenk-Einrichtung 118 ebenfalls um 90° geschwenkt und auf das Transportsystem 16 abgesenkt (Schwenkbewegung I und vertikale Linearbewegung T am Transportsystem 16).

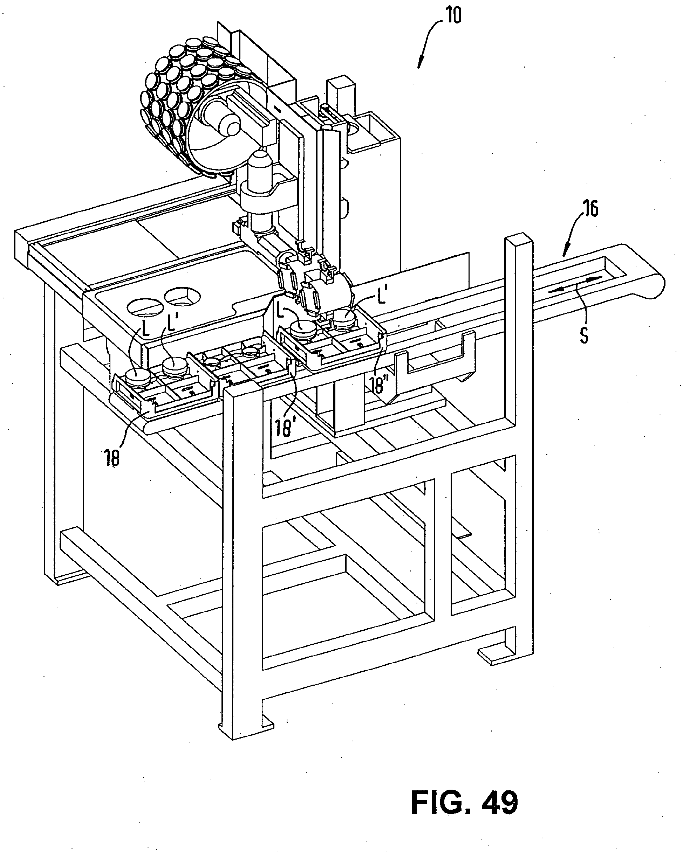

Fig. 49: In dieser Figur ist schließlich auf dem Transportsystem 16 links der Rezeptkasten 18 mit den fertig bearbeiteten Brillengläsern L, L' gezeigt, der jetzt abtransportiert werden kann. In der Mitte befindet sich der weitere Rezeptkasten 18' für die Brillengläser L, L', die gerade in der Feinbearbeitungsvorrichtung 10 bearbeitet werden. Rechts davon ist ein neuer Rezeptkasten 18" mit weiteren, zu bearbeitenden Brillengläsern L, L' dargestellt, der auf dem Transportsystem 16 in die Ladeposition gefahren wurde (horizontale Linearbewegung S am Transportsystem 16).

Der Belade-, Bearbeitungs- und Entladeablauf für alte/neue Brillengläser L, L' bzw. alte/neue Polierwerkzeuge 46 wiederholt sich auch für die weiteren Brillengläser L, L'.

Wenngleich vorstehend der gesamte Ablauf für ein Paar von Brillengläsern L, L' beschrieben wurde, versteht es sich, dass natürlich auch nur ein Brillenglas L wie beschrieben gehandhabt und bearbeitet werden kann - ein Fall, wie er in RX-Werkstätten durchaus auch vorkommt.

Es wird eine Vorrichtung zur Feinbearbeitung von optisch wirksamen Flächen an Brillengläsern als Werkstücken offenbart, mit mindestens einer Werkstückspindel, an der ein Werkstück spannbar ist, mindestens einer relativ zur Werkstückspindel bewegbaren Werkzeugspindel, an der ein Werkzeug für eine Werkstückbearbeitung aufnehmbar ist, und einem Ladesystem, das dazu dient, ein Werkstück zur Werkstückspindel hin oder davon weg und/oder ein Werkzeug zur Werkzeugspindel hin oder davon weg zu bringen. Eine Besonderheit der Vorrichtung besteht darin, dass das Ladesystem einen von Werkstückspindel und Werkzeugspindel separaten Ladekopf mit mindestens einem Ladeabschnitt aufweist, der sowohl mit wenigstens einer Aufnahme für ein Werkstück als auch mit wenigstens einer Aufnahme für ein Werkzeug ausgerüstet ist, so dass in einem Ladevorgang sowohl das Werkzeug als auch das Werkstück ladbar sind, wobei das Ladesystem einen Ladearm aufweist, an dem der Ladekopf um eine Schwenkachse schwenkbar gehalten ist, und der Ladearm mit Ladekopf um eine zur Schwenkachse senkrecht stehende weitere Schwenkachse schwenkbar sowie in einer Richtung linear verschiebbar ist, die parallel zur weiteren Schwenkachse verläuft, was insgesamt eine vergleichsweise hohe Produktivität der Vorrichtung ermöglicht.

### BEZUGSZEICHENLISTE

- 10: Feinbearbeitungsvorrichtung
- 12: Maschinengestell
- 14: Vertikalsäule
- 16: Transportsystem
- 18 - 18": Rezeptkasten
- 20: Waschstation
- 22: Ladesystem
- 24: Blechgehäuse
- 26: Arbeitsraum
- 28, 28': Werkzeugspindel (Werkzeug-Drehachsen C, C')
- 30, 30': Werkstückspindel (Werkstück-Drehachsen B, B')
- 32: Werkzeugmagazin
- 34: Schieber
- 36: Schwenkjoch
- 38: Konsole
- 40: Schwenkantrieb für Schwenkachse A
- 42: Harmonic-Drive-Getriebe für Schwenkachse A
- 44: Werkzeug-Schnittstelle
- 46: Polierwerkzeug
- 48: Drehantrieb für Werkzeug-Drehachsen C, C'
- 50: Riementrieb für Werkzeug-Drehachsen C, C'
- 52: Z-Schieber
- 54: Spannzange
- 56: Drehantrieb für Werkstück-Drehachsen B, B'
- 58: Y-Schlitten
- 60: Riementrieb für Werkstück-Drehachsen B, B'
- 62: Linearführung für Y-Achse
- 64: Z-Schlitten
- 66: Drehantrieb für Y-Achse
- 68: Riementrieb für Y-Achse
- 70: Spindeltrieb für Y-Achse
- 72: Linearführung für Z-Achse
- 74: Drehantrieb für Z-Achse
- 76: Flanschplatte
- 78: Riementrieb für Z-Achse
- 80: Spindeltrieb für Z-Achse
- 82: Ladekopf
- 84: Ladearm
- 86: Schwenkkonsole
- 88: W-Schlitten
- 90: Aktuatoranordnung für Linearbewegung W
- 92: Drehantrieb für horizontale Schwenkachse E
- 94: Drehantrieb für vertikale Schwenkachse F
- 96: Hauptaktuator für Linearbewegung W
- 98: Hilfsaktuator für Linearbewegung W
- 100: Anschlag
- 102, 102': Ladeabschnitt
- 104, 104': Parallelgreifer
- 106, 106': Vierfingergreifer
- 108: Werkzeug-Aufnahmetrommel
- 110: Drehantrieb für Werkzeugmagazin-Drehachse D
- 112: Harmonic-Drive-Getriebe für Werkzeugmagazin-Drehachse D
- 114: Linearaktuator für Linearbewegung X
- 116: Halter
- 118: Hub-Schwenk-Einrichtung (Linearbewegung T, Schwenkbewegung I)
- 120: Platte
- 122: Anschlag
- A: horizontale Schwenkachse der Werkzeugspindeln (winkellagegeregelt)
- B, B': horizontale Werkstück-Drehachsen (winkellagegeregelt)
- C, C': schwenkbare Werkzeug-Drehachsen (winkellagegeregelt)
- D: horizontale Werkzeugmagazin-Drehachse (winkellagegeregelt)
- E: horizontale Schwenkachse des Ladesystems (winkellagegeregelt)
- F: vertikale Schwenkachse des Ladesystems (winkellagegeregelt)
- I: Schwenkbewegung am Transportsystem (pneumatisch, ungesteuert)
- L, L': Brillenglas
- S: horizontale Linearbewegung am Transportsystem
- T: vertikale Linearbewegung am Transportsystem (pneumatisch, ungesteuert)
- W: vertikale Linearbewegung am Ladesystem (pneumatisch, ungesteuert)
- X: horizontale Linearbewegung des Werkzeugmagazins (pneumatisch, ungesteuert)
- Y: horizontale Linearachse für die Werkstückspindeln (lagegeregelt)
- Z: vertikale Linearachse für die Werkstückspindeln (lagegeregelt)

## Patentansprüche

1. Vorrichtung (10) zur Feinbearbeitung von optisch wirksamen Flächen an Brillengläsern (L, L'), mit mindestens einer Werkstückspindel (30, 30'), an der ein Brillenglas (L, L') spannbar ist, mindestens einer relativ zur Werkstückspindel (30, 30') bewegbaren Werkzeugspindel (28, 28'), an der ein Werkzeug (46) für eine Bearbeitung des Brillenglases (L, L') aufnehmbar ist, und einem Ladesystem (22), das dazu dient, ein Brillenglas (L, L') zur Werkstückspindel (30, 30') hin oder davon weg und/oder ein Werkzeug (46) zur Werkzeugspindel (28, 28') hin oder davon weg zu bringen, **dadurch gekennzeichnet, dass** das Ladesystem (22) einen von Werkstückspindel (30, 30') und Werkzeugspindel (28, 28') separaten Ladekopf (82) mit mindestens einem Ladeabschnitt (102, 102') aufweist, der sowohl mit wenigstens einer Aufnahme (106, 106') für ein Brillenglas (L, L') als auch mit wenigstens einer Aufnahme (104, 104') für ein Werkzeug (46) ausgerüstet ist, so dass in einem Ladevorgang sowohl das Werkzeug (46) als auch das Brillenglas (L, L') ladbar sind, wobei das Ladesystem (22) einen Ladearm (84) aufweist, an dem der Ladekopf (82) um eine Schwenkachse (E) schwenkbar gehalten ist, und der Ladearm (84) mit Ladekopf (82) um eine zur Schwenkachse (E) senkrecht stehende weitere Schwenkachse (F) schwenkbar sowie in einer Richtung (W) linear verschiebbar ist, die parallel zur weiteren Schwenkachse (F) verläuft.

2. Vorrichtung (10) nach Anspruch 1, **dadurch gekennzeichnet, dass** der Ladeabschnitt (102, 102') des Ladekopfs (82) zwei Aufnahmen (106, 106') für Brillengläser (L, L') aufweist, so dass mittels des Ladekopfs (82) in einem Ladevorgang ein in der Vorrichtung (10) bereits bearbeitetes Brillenglas (L, L') gegen ein in der Vorrichtung (10) noch zu bearbeitendes Brillenglas (L, L') austauschbar ist.

3. Vorrichtung (10) nach Anspruch 1 oder 2, **dadurch gekennzeichnet, dass** der Ladeabschnitt (102, 102') des Ladekopfs (82) zwei Aufnahmen (104, 104') für Werkzeuge (46) aufweist, so dass mittels des Ladekopfs (82) in einem Ladevorgang ein in der Vorrichtung (10) bereits verwendetes Werkzeug (46) gegen ein in der Vorrichtung (10) noch zu verwendendes Werkzeug (46) austauschbar ist.

4. Vorrichtung (10) nach einem der vorhergehenden Ansprüche, **dadurch gekennzeichnet, dass** zur gleichzeitigen Bearbeitung eines Brillenglaspaars (L, L'), insbesondere die Brillengläser für ein und dieselbe Brille, zwei Werkstückspindeln (30, 30') und zwei Werkzeugspindeln (28, 28') vorgesehen sind, wobei der Ladekopf (82) zur Bedienung beider Werkstückspindeln (30, 30') und beider Werkzeugspindeln (28, 28') in Parallelanordnung zwei der Ladeabschnitte (102, 102') aufweist.

5. Vorrichtung (10) nach einem der vorhergehenden Ansprüche, **dadurch gekennzeichnet, dass** es sich bei der Aufnahme für das Brillenglas (L, L') um einen Vierfingergreifer (106, 106') handelt.

6. Vorrichtung (10) nach einem der vorhergehenden Ansprüche, **dadurch gekennzeichnet, dass** es sich bei der Aufnahme für das Werkzeug (46) um einen Parallelgreifer (104, 104') handelt.

7. Vorrichtung (10) nach einem der vorhergehenden Ansprüche, **dadurch gekennzeichnet, dass** ferner ein Transportsystem (16) für die Brillengläser (L, L'), eine Waschstation (20) für die Brillengläser (L, L'), ein Arbeitsraum (26) für die Bearbeitung der Brillengläser (L, L') mittels der Werkzeuge (46) und ein Werkzeugmagazin (32) zur Aufnahme einer Mehrzahl von Werkzeugen (46) vorgesehen sind, die (16, 20, 26, 32) auf einem gemeinsamen Schwenkkreis um die weitere Schwenkachse (F) liegen und wahlweise von dem Ladekopf (82) anfahrbar sind.

8. Vorrichtung (10) nach einem der vorhergehenden Ansprüche, die in Zwillings-Bauweise zwei Werkstückspindeln (30, 30') zum Drehantreiben von zwei Brillengläsern (L, L') um Werkstück-Drehachsen (B, B') und zwei Werkzeugspindeln (28, 28') zum Drehantreiben von zwei Werkzeugen (46) um Werkzeug-Drehachsen (C, C') aufweist, wobei die Werkstückspindeln (30, 30') zudem in mindestens zwei verschiedenen Richtungen (Y, Z) relativ zu den Werkzeugspindeln (28, 28') bewegbar sind, **dadurch gekennzeichnet, dass** die Vorrichtung (10) für das Drehantreiben der zwei Brillengläser (L, L') und für das Drehantreiben der zwei Werkzeuge (46) jeweils nur einen Antrieb (56, 48) aufweist, wobei zur Erzeugung der Relativbewegungen zwischen den Werkstückspindeln (30, 30') und den Werkzeugspindeln (28, 28') für jede Bewegungsrichtung (Y, Z) auch nur jeweils ein Antrieb (66, 74) vorgesehen ist.

9. Vorrichtung (10) nach Anspruch 8, **dadurch gekennzeichnet, dass** die Werkzeugspindeln (28, 28') relativ zu den Werkstückspindeln (30, 30') zudem in einer dritten, von den vorgenannten zwei Richtungen (Y, Z) verschiedenen Richtung (A) bewegbar sind, wobei auch zur Erzeugung der Relativbewegung in der dritten Bewegungsrichtung (A) nur ein Antrieb (40) vorgesehen ist.

## Claims

1. Device (10) for finish-machining of optically effective surfaces of spectacle lenses (L, L'), comprising at least one workpiece spindle (30, 30'), to which a spectacle lens (L, L') can be clamped, at least one tool spindle (28, 28'), which is movable relative to the workpiece spindle (30, 30') and at which a tool (46) for machining the spectacle lens (L, L') can be mounted, and a loading system (22), which serves the purpose of bringing a spectacle lens (L, L') to or taking it away from the workpiece spindle (30, 30') and/or bringing a tool (46) to or taking it away from the tool spindle (28, 28'), **characterized in that** the loading system (22) comprises a loading head (82), which is separate from workpiece spindle (30, 30') and tool spindle (28, 28'), with at least one loading section (102, 102') which is equipped not only with at least one mount (106, 106') for a spectacle lens (L, L'), but also with at least one mount (104, 104') for a tool (46) so that both the tool (46) and the spectacle lens (L, L') are loadable in one loading process, wherein the loading system (22) comprises a loading arm (84) at which the loading head (82) is mounted to be pivotable about a pivot axis (E), and the loading arm (84) together with the loading head (82) is pivotable about a further pivot axis (F) perpendicular to the pivot axis (E) as well as linearly displaceable in a direction (W) extending parallel to the further pivot axis (F).

2. Device (10) according to claim 1, **characterized in that** the loading section (102, 102') of the loading head (82) comprises two mounts (106, 106') for spectacle lenses (L, L') so that by means of the loading head (82) a spectacle lens (L, L') already machined in the device (10) can be exchanged in one loading process for a spectacle lens (L, L') still to be machined in the device (10).

3. Device (10) according to claim 1 or 2, **characterized in that** the loading section (102, 102') of the loading head (82) comprises two mounts (104, 104') for tools (46) so that by means of the loading head (82) a tool (46) already used in the device (10) can be exchanged in one loading process for a tool (46) still to be used in the device (10).

4. Device (10) according to any one of the preceding claims, **characterized in that** two workpiece spindles (30, 30') and two tool spindles (28, 28') are provided for simultaneous machining of a spectacle lens pair (L, L'), particularly the spectacle lenses for one and the same spectacles, wherein the loading head (82) has two loading sections (102, 102') in parallel arrangement for serving the two workpiece spindles (30, 30') and the two tool spindles (28, 28').

5. Device (10) according to any one of the preceding claims, **characterized in that** the mount for the spectacle lens (L, L') is a four-finger gripper (106, 106').

6. Device (10) according to any one of the preceding claims, **characterized in that** the mount for the tool (46) is a parallel gripper (104, 104').

7. Device (10) according to any one of the preceding claims, **characterized in that** in addition a transport system (16) for the spectacle lenses (L, L'), a washing station (20) for the spectacle lenses (L, L'), a working space (26) for the machining of the spectacle lenses (L, L') by means of the tools (46) and a tool magazine (32) for reception of a plurality of tools (46) are provided, which system (16), station (20), space (26) and magazine (32) lie on a common pivot circle about the further pivot axis (F) and can be selectably moved to by the loading head (82).

8. Device (10) according to any one of the preceding claims, which in twin mode of construction comprises two workpiece spindles (30, 30') for rotational driving of two spectacle lenses (L, L') about workpiece axes (B, B') of rotation and two tool spindles (28, 28') for rotational driving of two tools (46) about tool axes (C, C') of rotation, wherein the workpiece spindles (30, 30') are in addition movable in at least two different directions (Y, Z) relative to the tool spindles (28, 28'), **characterized in that** the device (10) for the rotational driving of the two spectacle lenses (L, L') and for the rotational driving of the two tools (46) comprises in each instance only one drive (56, 48), wherein also only one respective drive (66, 74) is provided for generating the relative movements between the workpiece spindles (30, 30') and the tool spindles (28, 28') for each movement direction (Y, Z).

9. Device (10) according to claim 8, **characterized in that** the tool spindles (28, 28') are movable relative to the workpiece spindles (30, 30') in addition in a third direction (A) different from the aforesaid two directions (Y, Z), wherein also only one drive (40) is provided for generating the relative movement in the third movement direction (A).

## Revendications

1. Installation (10) pour l'usinage de finition de surfaces optiques actives sur des verres de lunettes (L, L') ou lentilles ophtalmiques, comprenant au moins une broche porte-pièce (30, 30') sur laquelle peut être serré un verre de lunettes (L, L'), au moins une broche porte-outil (28, 28') mobile par rapport à la broche porte-pièce (30, 30') et dans laquelle peut être reçu un outil (46) pour un usinage du verre de lunettes (L, L'), et comprenant également un système de chargement (22), qui sert à amener un verre de lunettes (L, L') à la broche porte-pièce (30, 30') ou à l'en retirer, et/ou à amener un outil (46) à la broche porte-outil (28, 28') ou à l'en retirer,
**caractérisée en ce que** le système de chargement (22) comprend une tête de chargement (82), qui est séparée de la broche porte-pièce (30, 30') et de la broche porte-outil (28, 28') et comporte au moins un tronçon de chargement (102, 102') équipé aussi bien d'au moins un emplacement d'accueil (106, 106') pour un verre de lunettes (L, L'), que d'au moins un emplacement d'accueil (104, 104') pour un outil (46), de sorte qu'en une seule opération de chargement il est possible de charger aussi bien l'outil (46) que le verre de lunettes (L, L'), le système de chargement (22) présentant un bras de chargement (84) sur lequel est maintenue la tête de chargement (82) de manière à pouvoir pivoter autour d'un axe de pivotement (E), et le bras de chargement (84) avec la tête de chargement (82) pouvant pivoter autour d'un autre axe de pivotement (F) perpendiculaire à l'axe de pivotement (E), et pouvant coulisser linéairement dans une direction (W), qui s'étend parallèlement audit autre axe de pivotement (F).

2. Installation (10) selon la revendication 1, **caractérisée en ce que** le tronçon de chargement (102, 102') de la tête de chargement (82) présente deux emplacements d'accueil (106, 106') pour verres de lunettes (L, L'), de sorte qu'à l'aide de la tête de chargement (82), en une seule opération de chargement, un verre de lunettes (L, L') déjà usiné dans l'installation (10) peut être remplacé par un verre de lunettes (L, L') devant encore être usiné dans l'installation (10).

3. Installation (10) selon la revendication 1 ou la revendication 2, **caractérisée en ce que** le tronçon de chargement (102, 102') de la tête de chargement (82) présente deux emplacements d'accueil (104, 104') pour outils (46), de sorte qu'à l'aide de la tête de chargement (82), en une seule opération de chargement, un outil (46) ayant déjà été utilisé dans l'installation (10) peut être remplacé par un outil (46) devant encore être utilisé dans l'installation (10).

4. Installation (10) selon l'une des revendications précédentes, **caractérisée en ce que** lors de l'usinage simultané d'une paire de verres de lunettes (L, L'), notamment les verres de lunettes pour une seule et même paire de lunettes, il est prévu deux broches porte-pièce (30, 30') et deux broches porte-outil (28, 28'), la tête de chargement (82) présentant, en vue de desservir les deux broches porte-pièce (30, 30') et les deux broches porte-outil (28, 28'), deux des tronçons de chargement (102, 102') selon un agencement en parallèle.

5. Installation (10) selon l'une des revendications précédentes, **caractérisée en ce que** concernant l'emplacement d'accueil pour le verre de lunettes (L, L'), il s'agit d'un préhenseur à quatre doigts (106, 106').

6. Installation (10) selon l'une des revendications précédentes, **caractérisée en ce que** concernant l'emplacement d'accueil pour l'outil (46), il s'agit d'un préhenseur parallèle (104, 104').

7. Installation (10) selon l'une des revendications précédentes, **caractérisée en ce que** par ailleurs sont prévus un système de transport (16) pour les verres de lunettes (L, L'), un poste de lavage (20) pour les verres de lunettes (L, L'), une chambre de travail (26) pour l'usinage des verres de lunettes (L, L') au moyen des outils (46), et un magasin d'outils (32) destiné à accueillir une pluralité d'outils (46), qui (16, 20, 26, 32) sont situés sur un cercle de pivotement commun autour dudit autre axe de pivotement (F) et peuvent être accostés sélectivement par la tête de chargement (82).

8. Installation (10) selon l'une des revendications précédentes, qui, dans un mode de construction double ou jumelé, comprend deux broches porte-pièce (30, 30') pour l'entraînement en rotation de deux verres de lunettes (L, L') autour d'axes de rotation de pièce (B, B'), et deux broches porte-outil (28, 28') pour l'entraînement en rotation de deux outils (46) autour d'axes de rotation d'outil (C, C'), les broches porte-pièce (30, 30') étant en outre mobiles selon au moins deux directions différentes (Y, Z) par rapport aux broches porte-outil (28, 28'), **caractérisée en ce que** l'installation (10) comporte, pour l'entraînement en rotation des deux verres de lunettes (L, L') et pour l'entraînement en rotation des deux outils (46), respectivement un seul moyen d'entraînement (56, 48), et pour produire les mouvements relatifs entre les broches porte-pièce (30, 30') et les broches porte-outil (28, 28'), il n'est également prévu respectivement qu'un seul moyen d'entraînement (66, 74) pour chaque direction de mouvement (Y, Z).

9. Installation (10) selon la revendication 8, **caractérisée en ce que** les broches porte-outil (28, 28') sont en outre mobiles par rapport aux broches porte-pièce (30, 30') dans une troisième direction (A) différente des deux directions (Y, Z) précitées, et il n'est également prévu qu'un seul moyen d'entraînement (40) pour le mouvement relatif dans la troisième direction de mouvement (A).
